# EUROPEAN PATENT APPLICATION

(11) **EP 3 978 364 A1**
(43) Date of publication of application: **06.04.2022**
(21) Application number: 20813724.0
(22) Date of filing: 30.05.2020
(51) Int. Cl.: B64D 11/00, F16F 1/06, F16F 1/10, F16F 1/14, F16F 7/09, F16F 9/19, F16F 9/32, F16F 9/52, F16F 15/02, F16F 15/023, F16F 15/03, B60N 2/54

(54) **LINK MECHANISM, VEHICLE UPPER STORAGE-RACK STRUCTURE, AND SEAT SUSPENSION MECHANISM**

(30) Priority: 31.05.2019 JP 2019103386
(71) Applicant: Delta Kogyo Co., Ltd., Aki-gun, Hiroshima 735-8501 (JP)
(72) Inventor: FUJITA, Etsunori, Aki-gun, Hiroshima 735-8501 (JP); MASHINO, Masaharu, Aki-gun, Hiroshima 735-8501 (JP); MAKITA, Soichi, Aki-gun, Hiroshima 735-8501 (JP); KUWANO, Ryuji, Aki-gun, Hiroshima 735-8501 (JP); SUGIMOTO, Eiji, Aki-gun, Hiroshima 735-8501 (JP); OGURA, Yumi, Aki-gun, Hiroshima 735-8501 (JP); NISHIDA, Atsushi, Aki-gun, Hiroshima 735-8501 (JP)
(74) Representative: Hoffmann Eitle
(86) International application number: PCT/JP2020/021505
(87) International publication number: WO 2020/241895

(57) **Abstract**

The operation in a closing direction and the operation in an opening direction of a storage rack are performed efficiently with small force. Fixed frames 11 and a storage rack 10 are connected by link mechanisms 20, and the link mechanism 20 includes fixed-side links 21, 22 linked to the fixed frame 11 and movable-side links 23, 24 linked to the storage rack 10. When a position of one ends of the movable-side links 23, 24 is located closer to one ends of the fixed-side links 21, 22 than a balanced point P, the elastic member 30 biases the storage rack 10 in an open-position direction. In the open position, since the elastic member 30 biases the storage rack 10 in the opening direction, an open state is maintained as long as the position of the one ends of the movable-side links 23, 24 does not return to the change point position. According to the present invention, the open position can be held by a simple structure without using electric power.

## Description

### Technical Field

The present invention relates to a link mechanism, and, a vehicle upper storage-rack structure and a seat suspension mechanism for which the link mechanism is used.

### Background Art

In vehicles such as aircraft and trains, storage racks for accommodating baggage are provided over seats. Among them, in particular, the storage rack referred to as an overhead bin and provided in a passenger cabin of the aircraft is, to prevent the baggage from jumping out, of the structure in which the storage rack has its tip edge come close to a wall portion of an interior upper portion to be closed when turned after placing the baggage, as presented in Patent Document 1. Patent Document 1 discloses a lift assist in which, to assist lifting force when the storage rack is closed after accommodating the baggage therein, while a lift assist spring such as a gas spring is provided, a spring lock which locks movement of the spring when unnecessary for the assist by using the spring, and releases the lock when necessary is combined therewith.

On one hand, Patent Documents 2, 3 disclose a seat suspension mechanism in which an upper frame provided to be movable up and down relative to a lower frame is elastically supported by a magnetic spring and torsion bars. The seat suspension mechanisms exhibit, when a characteristic that restoring force of a magnetic spring in the same direction as an acting direction of restoring force of the torsion bars increases with an increase in displacement amount is referred to as "a positive spring characteristic (a spring constant at this time is referred to as "a positive spring constant")" and a characteristic that the restoring force of the magnetic spring in the same direction as the acting direction of the restoring force of the torsion bars decreases in spite of the increase in displacement amount is referred to as "a negative spring characteristic (a spring constant at this time is referred to as "a negative spring constant")" by making use of the fact that the magnetic spring exhibits the negative spring characteristic in a predetermined displacement range and combining the magnetic spring with the torsion bars exhibiting the positive spring characteristic, a characteristic of a constant load in which a load value relative to a displacement amount in the whole system resulting from the superposition of the characteristics of both is substantially constant (a spring constant is substantially zero) in the predetermined displacement range.

### Prior Art Document

### Patent Document

Patent Document 1: Japanese Unexamined Patent Application Publication No. 2013-525182
Patent Document 2: Japanese Patent Application Laid-open No. 2017-210073
Patent Document 3: Japanese Patent Application Laid-open No. 2018-203040

### Summary of the Invention

### Problems to Be Solved by the Invention

The spring lock disclosed in Patent Document 1 is configured to have engaging claws engageable in a spring shaft, prevent the lift assist spring from working by the engaging claws latching on the spring shaft when the storage rack is opened from an up position to a down position, and make assist force caused by the lift assist spring act by releasing the latching by using the engaging claws when the storage rack is closed from the down position to the up position. The lift assist spring requires such a mechanism of the spring lock for maintaining the open state since spring force acts in the closing direction of the storage rack. However, the operation control of the lift assist spring by using the spring lock of Patent Document 1 is performed basically by the engaging claws controlling the aforesaid latch operation using a solenoid, to causes a complicated structure and a rise in cost such as connection with an electric system to supply electric power for operating the solenoid and a need of an electrical switch for the operation control.

The suspensions of Patent Documents 2, 3 are configured to, owing to the aforesaid configuration using the magnetic spring and the torsion bars, absorb normal vibrations having predetermined frequencies and amplitudes in the constant load region where the spring constant resulting from the superposition of the spring constants of both is substantially zero, and absorb energy caused by impact vibrations by using a damper suspended between the upper frame and the lower frame. However, when load mass of the seat mounted on the upper frame is larger or the suspensions cope with a use for running on a road surface having large bumps and potholes, there is a possibility that the upper frame touches the bottom at a stroke end. To avoid the above, there is considered means for increasing a stroke amount of the upper frame relative to the lower frame, which makes the whole seat larger, and it is therefore desirable to be capable of coping with vibration absorption and impact absorption without increasing the stroke amount.

The present invention was made in consideration of the above, and has an object to provide a pantograph type of link mechanism which allows an open position to be held by a simple structure without using electrical equipment when applied to a vehicle upper storage-rack structure, and further allows predetermined vibration absorbing function and impact absorbing function to be served in a limited stroke amount without making the whole seat larger when applied to a seat suspension mechanism. Further, the present invention has an object to provide the vehicle upper storage-rack structure and the seat suspension mechanism in each of which the pantograph type of link mechanism is incorporated.

### Means for Solving the Problem

To solve the above problem, the present invention provides a link mechanism which is a pantograph type of link mechanism,
the pantograph type of link mechanism includes: two fixed-side links having fixed-member pivotal support portions pivotally supported by a fixed member; and two movable-side links having movable-member pivotal support portions pivotally supported by a movable member, fixed-side connection portions of the fixed-side links and movable-side connection portions of the movable-side links are turnably linked with one another, and the movable member is supported to be displaceable relative to the fixed member,
an elastic member which imparts elastic force to bias the movable-side links in a turning direction,
the movable-member pivotal support portions are displaceable to move back and forth across a region on one side close to the fixed-member pivotal support portions and a region on the other side opposite thereto while putting a change point of the movable-side links therebetween, and
the movable-side links are biased in a direction in which the movable-member pivotal support portions approach the fixed-member pivotal support portions when the movable-member pivotal support portions are located in the region on one side, and the movable-side links are biased in a direction in which the movable-member pivotal support portions separate from the fixed-member pivotal support portions when the movable-member pivotal support portions are located in the region on the other side, by the elastic member.

Preferably, the link mechanism includes a tensile coil spring suspended between the movable-side links as the elastic member,
wherein a point where the movable-member pivotal support portions are located on a straight line connecting fulcrums of the tensile coil spring with the two movable-side links when seen from a direction perpendicular to a turning surface of the movable-side links and the fixed-side links is the change point.

Preferably, the link mechanism further includes a damper.

Preferably, the damper is a telescopic type in which a piston relatively moves in a cylinder, and is suspended at least one of between the two fixed-side links and between the two movable-side links.

Preferably, the damper in which
the cylinder includes an outer fixed cylinder linked to any link of the fixed-side links and the movable-side links, and an inner movable cylinder provided to be movable in the outer fixed cylinder, and
the piston is disposed in the inner movable cylinder and supported by a piston rod linked to any link of the fixed-side links and the movable-side links,
exhibits a predetermined damping force when the inner movable cylinder does not relatively move in the outer fixed cylinder and the piston relatively moves in the inner movable cylinder.

Further, the present invention provides a vehicle upper storage-rack structure, the vehicle upper storage-rack structure includes a storage rack whose base portion is pivotally supported by a fixed frame provided in an interior upper portion of a vehicle and which is opened and closed by turning operation between an open position where a storage opening confronts a passenger cabin aisle and a closed position where the storage opening is further above than the open position,
wherein the link mechanism according to any one of claims 1 to 5 is provided as a link mechanism connecting the fixed frame as the fixed member and the storage rack as the movable member,
wherein the link mechanism is provided so that the movable-member pivotal support portions of the two movable-side links are located in a region on one side close to the fixed-member pivotal support portions in the open position of the storage rack, and the movable-member pivotal support portions of the two movable-side links are located in the region on the other side in the close position of the storage rack, and
wherein the movable-member pivotal support portions are biased in the open-position direction of the storage rack which is a direction of approaching the fixed-member pivotal support portions by the elastic member in the open position of the storage rack, and the movable-member pivotal support portions are biased in the open-position direction of the storage rack which is a direction of separating from the fixed-member pivotal support portions by the elastic member in the close position of the storage rack.

The vehicle upper storage-rack structure of the present invention is suitable for aircraft.

Further, the present invention provides
a seat suspension mechanism disposed between a vehicle body structure and a seat, the seat suspension mechanism includes:
   a spring mechanism elastically supporting an upper frame as the movable member mounted on the seat side relative to a lower frame as the fixed member mounted on the vehicle body structure side; and
   a damper exhibiting damping force to absorb energy when the upper frame moves up and down relative to the lower frame,
wherein the spring mechanism includes:
   a linear spring exhibiting a linear characteristic of biasing the upper frame in a direction of separating from the lower frame in a normal state; and
   a magnetic spring including a stationary magnet, and a movable magnet to displace a relative position to the stationary magnet with up-down movement of the upper frame relative to the lower frame, and exhibiting a nonlinear characteristic of varying a spring constant depending on the relative position between the stationary magnet and the movable magnet, and
   the spring mechanism further includes
   the link mechanism as a link mechanism supporting the upper frame to be movable up and down relative to the lower frame,
   wherein the link mechanism is provided so that the movable-member pivotal support portions of the two movable-side links are located in a region on one side close to the fixed-member pivotal support portions when the upper frame is located further below than a balanced point, and the movable-member pivotal support portions of the two movable-side links are located in the region on the other side when the upper frame is located further above than the balanced point,
   wherein the movable-member pivotal support portions are biased in a lower direction which is a direction of approaching the fixed-member pivotal support portions by the elastic member of the link mechanism when the upper frame is located further below than the balanced point, and the movable-member pivotal support portions are biased in an upper direction which is a direction of separating from the fixed-member pivotal support portions by the elastic member of the link mechanism when the upper frame is located further above than the balanced point, and
   wherein a load-deflection characteristic combining the linear spring, the magnetic spring, and, the elastic member of the link mechanism includes a characteristic of being a constant load in a displacement range corresponding to a predetermine up-down movement range including the balanced point of the upper frame.

### Effect of the Invention

The pantograph type of link mechanism of the present invention is configured such that the movable-member pivotal support portions pivotally supported by the movable member are biased in the direction in which the movable-member pivotal support portions approach the fixed-member pivotal support portions by the elastic member when located in the region on one side close to the fixed-member pivotal support portions pivotally supported by the fixed member while putting the change point of the two movable-side links between, and the movable-member pivotal support portions are biased in the direction in which the movable-member pivotal support portions separate from the fixed-member pivotal support portions by the aforesaid elastic member when located on the other side opposite thereto while putting the change point of the two movable-side links between. This allows the bias direction resulting from the elastic member to be turned to the reverse direction depending on the position of the movable-member pivotal support portions relative to the change point of the two movable-side links. Consequently, despite a simple structure, the pantograph type of link mechanism can be suitably used for the mechanism required to make the reverse forces act depending on the position of the movable-member pivotal support portions.

Further, the vehicle upper storage-rack structure of the present invention is set such that the fixed frame which is the fixed member and the storage rack which is the movable member are connected by the aforesaid pantograph type of link mechanism, and the movable-member pivotal support portions pass the change point of the two movable-side links in the middle of the open/closed range of the storage rack. This causes, in the open position, the elastic member to bias the storage rack in the opening direction, which maintains the open state as long as the movable-member pivotal support portions do not return to the change point. Consequently, according to the present invention, the open position can be held by a simple structure without using electric power. On one hand, when the movable-member pivotal support portions return to the change point, the elastic member biases the storage rack in the closing direction, thereby allowing the operation in the closing direction to be performed through light operating force.

Further, in the seat suspension mechanism of the present invention, the lower frame which is the fixed member and the upper frame which is the movable member are connected by the aforesaid pantograph type of link mechanism, and the movable-member pivotal support portions linked to the upper frame are biased in the direction of approaching the fixed-member pivotal support portions which is the lower-frame direction when located closer to the lower frame than the change point of the two movable-side links. Accordingly, in the case of being located closer to the lower frame than the change point of the two movable-side links, the elastic member of the link mechanism causes a negative spring characteristic of biasing the upper frame in the lower-frame direction to function. Consequently, since the negative spring characteristic is established not only by the magnetic spring but also by the link mechanism of the present invention, the magnetic spring is allowed to achieve reduction in stroke amount and compact size, which makes it possible to serve predetermined vibration absorbing function and impact absorbing function in a limited stroke amount while avoiding a larger size as the whole seat suspension mechanism.

### Brief Description of Drawings

[FIG. 1] FIG. 1 illustrates a vehicle upper storage-rack structure using a pantograph type of link mechanism according to a first embodiment of the present invention, and is a perspective view illustrating a state of a closed position.
[FIG. 2] FIG. 2 illustrates the vehicle upper storage structure in FIG. 1, and is a perspective view illustrating a state of an open position.
[FIG. 3] FIG. 3 is a side view of FIG. 1.
[FIG. 4] FIG. 4 is a view illustrating a part of a front view of FIG. 1.
[FIG. 5] FIG. 5 is a side view of FIG. 2.
[FIG. 6] FIG. 6 is a view illustrating a part of a front view of FIG. 2.
[FIGs. 7] FIG. 7(a) is a plan view illustrating an appearance of a damper, and FIG. 7(b) is a side view of FIG. 7(a).
[FIG. 8] FIG. 8 is a sectional view taken along a line A-A of FIG. 7(a).
[FIG. 9] FIG. 9 is a view illustrating movements of the damper when a storage rack is operated from the closed position in an opening direction.

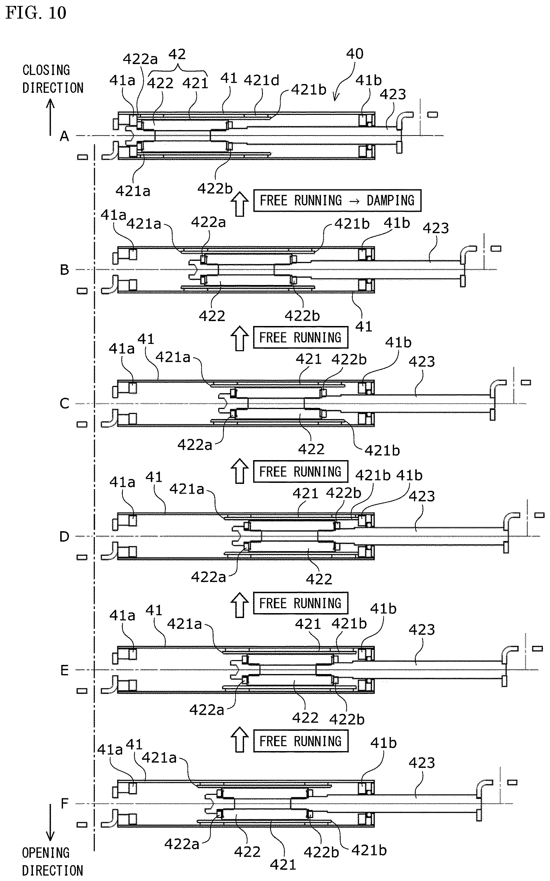

[FIG. 10] FIG. 10 is a view illustrating movements of the damper when the storage rack is operated from the open position in a closing direction.
[FIG. 11] FIG. 11 is a view illustrating operating forces at A to F positions when the storage rack is operated from the closed position in the opening direction at the time of unloading.
[FIG. 12] FIG. 12 is a view illustrating operating forces at A to F positions when the storage rack is operated from the open position in the closing direction at the time of unloading.
[FIG. 13] FIG. 13 is a view illustrating operating forces at A to F positions when the storage rack is operated from the closed position in the opening direction at the time of loading.
[FIG. 14] FIG. 14 is a view illustrating operating forces at A to F positions when the storage rack is operated from the open position in the closing direction at the time of loading.
[FIG. 15] FIG. 15 is a graph summarizing and representing the operating forces at A to F positions in FIG. 11 to FIG. 14.
[FIG. 16] FIG. 16 illustrates a vehicle upper storage-rack structure using a pantograph type of link mechanism according to a second embodiment of the present invention, and is a perspective view illustrating a state of a closed position.
[FIG. 17] FIG. 17 illustrates the vehicle upper storage structure in FIG. 16, and is a perspective view illustrating a state of an open position.
[FIGs. 18] FIG. 18(a) is a side view of FIG. 16, and FIG. 18(b) is a view illustrating a part of a front view of FIG. 16.
[FIG. 19] FIG. 19 is a graph illustrating load values of a tensile coil spring, a first spiral spring and a second spiral spring relative to angles of a storage rack.
[FIG. 20] FIG. 20 is a graph illustrating damping force of the damper relative to the angles of the storage rack.
[FIGs. 21] FIGs. 21(a) to (c) are views illustrating movements of the tensile coil spring relative to positions of the storage rack, and working directions of the tensile coil spring and the spiral springs.
[FIGs. 22] FIGs. 22(a) to (c) are views for explaining movements of the damper relative to the positions of the storage rack.
[FIG. 23] FIG. 23 is a view for explaining a measuring method of operating force.
[FIG. 24] FIG. 24 is a chart illustrating operating forces in a closing direction.
[FIG. 25] FIG. 25 is a chart illustrating operating forces in an opening direction.
[FIGs. 26] FIGs. 26 are views each illustrating a seat suspension mechanism in which a pantograph type of link mechanism according to a third embodiment of the present invention is installed together, and, (a) illustrates a state where an upper frame is located at the top end, (b) illustrates a state where the upper frame is located at a balanced point, and (c) illustrates a state where the upper frame is located at the bottom end, respectively.
[FIGs. 27] FIGs 27 are views each illustrating a structure in which a tensile coil spring and a damper for pantograph in FIG. 26 are removed for explaining movements of fixed-side links and movable-side links of the pantograph type of link mechanism, and, (a) illustrates the state where the upper frame is located at the top end, (b) illustrates the state where the upper frame is located at the balanced point, and (c) illustrates the state where the upper frame is located at the bottom end, respectively.
[FIG. 28] FIG. 28 is a view illustrating a schematic configuration of the seat suspension mechanism.

### Modes for Carrying out the Invention

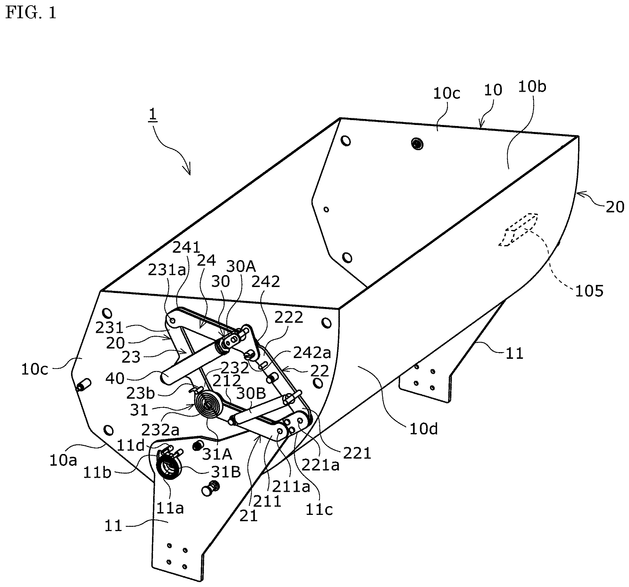

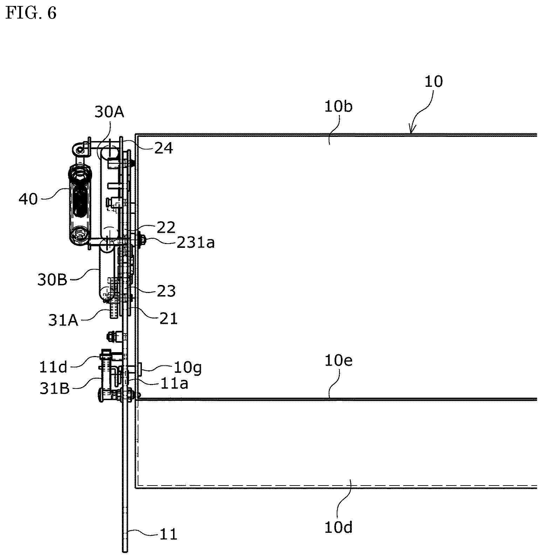

The present invention will be hereinafter described in more detail based on embodiments illustrated in the drawings. FIG. 1 to FIG. 6 are views illustrating a vehicle upper storage-rack structure 1 using a pantograph type of link mechanism 20 according to a first embodiment of the present invention. The link mechanism 20 of this embodiment has an elastic member 30 and a damper 40.

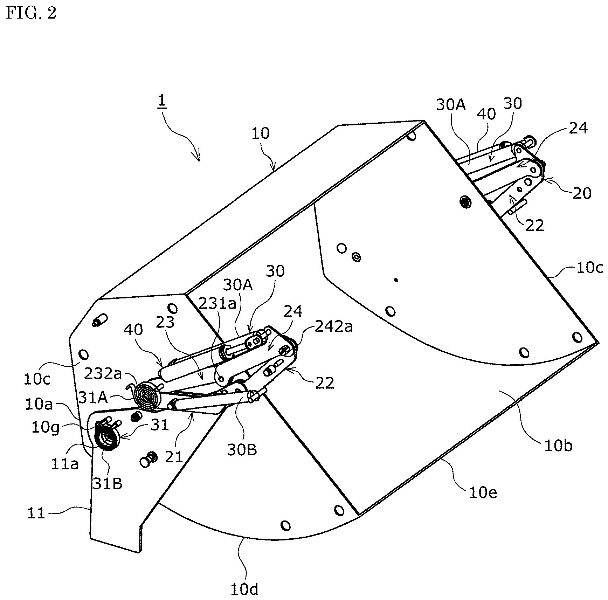

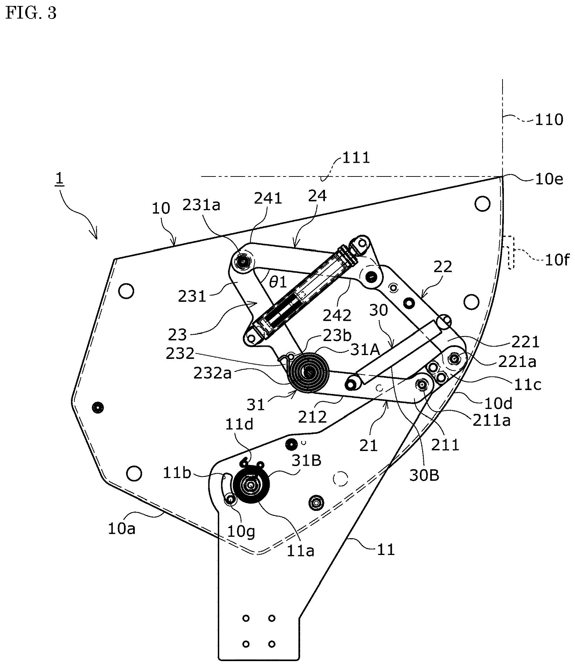

First, a storage rack 10 of the upper storage-rack structure 1 using the link mechanism 20 will be described. The storage rack 10 is referred to as an overhead bin of an aircraft, and constitutes a movable member supported by the link mechanisms 20. The storage racks 10 are provided at predetermined intervals in an interior upper portion in the aircraft, and each has portions close to lower portions 10a pivotally supported through support shafts 11a between a pair of fixed frames (frames fixed on a wall portion of an airframe) 11, 11 constituting fixed members. The storage rack 10 is formed in a substantially semi-tubular shape as a whole, whose opening surface serves as a storage opening 10b in accommodating baggage inside, and includes end wall portions 10c, 10c at both ends along an axial direction. Then, in a gap between the fixed frames 11, 11, the storage rack 10 is positioned and mounted so that the end wall portions 10c, 10c are adjacent to the fixed frames 11, 11. As illustrated in FIG. 1, FIG. 3 and FIG. 4, when the storage rack 10 is turned upward centered at the support shafts 11a, the storage opening 10b is finally faced to be substantially confronted by a ceiling surface 111 of a fixed framework 110 fixed on an upper portion of the airframe (refer to FIG. 3). With this structure, a substantially arc-shaped surface 10d confronts a passenger cabin aisle in the aircraft, and the storage opening 10b faces in an interior upper direction between the fixed frames 11, 11 and is not exposed to the passenger cabin aisle, to be in a closed state. From this state, as illustrated in FIG. 2, FIG. 5 and FIG. 6, when the storage rack 10 is turned downward centered at the support shafts 11a, the substantially arc-shaped surface 10d is displaced from downward to backward, and the storage opening 10b is in an open position confronting the passenger cabin aisle. Note that between the fixed framework 110 provided in the interior upper portion between the fixed frames 11, 11, and, a front edge portion 10e of the storage opening 10b, lock members (not illustrated) engaging each other are provided in a closed position where both of them are in close contact, and at the time of opening-direction operation, a person hangs his/her hand on a handle 10f provided on an outer surface of the substantially arc-shaped surface 10d and pulls it toward him/her, thereby releasing the engagement of the lock members. This point is similar to a structure of storage racks 10 in typical aircraft.

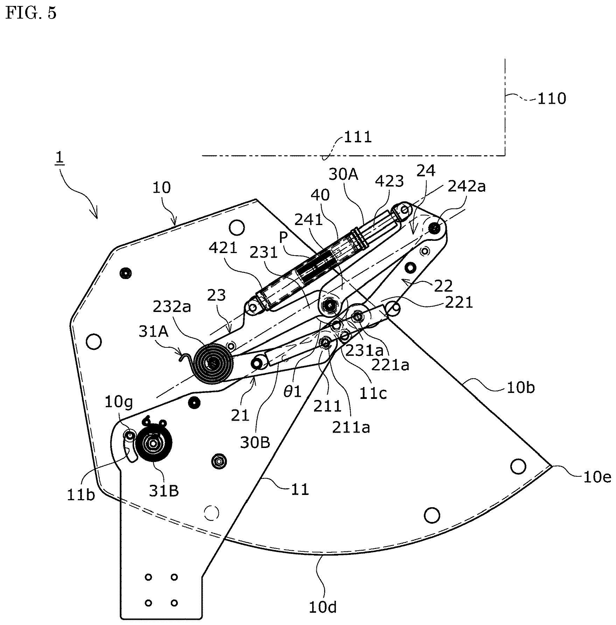

On each of the end wall portions 10c of the storage rack 10, a turning-range restricting pin 10g projecting in a direction of each of the fixed frames 11, 11 is provided and inserted through a turning-range restricting slot 11b formed in each of the fixed frames 11, 11. As illustrated in FIG. 3 and FIG. 5, the turning-range restricting slot 11b is restricted in a substantially arc shape in the up-down direction, and the turning-range restricting pin 10g comes into contact with an upper edge of the turning-range restricting slot 11b (a state in FIG. 5), thereby restricting the open position of the storage rack 10, and the turning-range restricting pin 10g comes into contact with a lower edge of the turning-range restricting slot 11b (a state in FIG. 3), thereby restricting the closed position of the storage rack 10.

The link mechanism 20 is provided on each of the right and left sides of the storage rack 10 which is the movable member. Specifically, the link mechanism 20 is suspended between the adjacent fixed frame 11 which is the fixed member and the end wall portion 10c of the storage rack 10 which is the movable member. In this manner, a pair of the link mechanisms 20 are provided on the right and left sides, and both of them have the same configuration. Each of the link mechanisms 20 has two fixed-side links 21, 22 and two movable-side links 23, 24. The two fixed-side links 21, 22, whose one ends (fixed-member pivotal support portions) 211, 221 are pivotally supported together in the vicinity of a front end 11c of the fixed frame 11 through first shaft pins 211a, 221a, are displaceable so that the sides of other ends (fixed-side connection portions) 212, 222 are widened in a substantially V shape centered at the first shaft pins 211a, 221a.

In the two movable-side links 23, 24, one ends (movable-member pivotal support portions) 231, 241 are pivotally supported together by a second shaft pin 231a. The second shaft pin 231a is linked to the end wall portion 10c of the storage rack 10, which causes the storage rack 10 to be supported by the link mechanism 20. Other ends (movable-side connection portions) 232, 242 are pivotally supported through third shaft pins 232a, 242a by the other ends (fixed-side connection portions) 212, 222 of the fixed-side links 21, 22, and the movable-side links 23, 24 are displaceable so that the sides of the other ends (movable-side connection portions) 232, 242 are widened in a substantially V shape centered at the one ends (movable-member pivotal support portions) 231, 241.

In the link mechanism 20, as described above, the one ends (fixed-member pivotal support portions) 211, 221 are connected to the fixed frame 11 through the first shaft pins 211a, 221a, and the one ends (movable-member pivotal support portions) 231, 241 are connected to the storage rack 10 through the second shaft pin 231a, resulting in that the mounting positions are each fixed, while the third shaft pins 232a, 242a are not connected to either of the end wall portion 10c of the storage rack 10 and the fixed frame 11, and both of the third shaft pins 232a, 242a are displaceable. When the storage rack 10 is turned from the open position in the closing direction, that is, when a state in FIG. 2 and FIG. 5 is changed to a state in FIG. 1 and FIG. 3, a position of the second shaft pin 231a pivotally supporting the one ends (movable-member pivotal support portions) 231, 241 of the movable-side links 23, 24 is displaced in a direction of separating from the first shaft pins 211a, 221a pivotally supporting the one ends (fixed-member pivotal support portions) 211, 221 of the fixed-side links 21, 22, and centered as the first shaft pins 211a, 221a, the other ends (fixed-side connection portions) 212, 222 of the fixed-side links 21, 22 are displaced in a direction of approaching each other and the other ends (movable-side connection portions) 232, 242 of the movable-side links 23, 24 are displaced in a direction of approaching each other. When the second shaft pin 231a is the farthest from the first shaft pins 211a, 221a and, as illustrated in FIG. 1 and FIG. 3, the two fixed-side links 21, 22 and the two movable-side links 23, 24 form a substantially rhombic shape (substantial quadrangle) when seen from the end wall portion 10c side of the storage rack 10, the storage opening 10b is in the closed position facing in a substantially upper direction to confront the ceiling surface 111 side.

When the storage rack 10 is turned so as to be from the closed position in FIG. 1 and FIG. 3 to the open position in FIG. 2 and FIG. 5 where the storage opening 10b faces to the passenger cabin aisle, the position of the second shaft pin 231a is displaced toward the passenger cabin aisle with the storage rack 10, so that the fixed-side links 21, 22 is widened centered at the first shaft pins 211a, 221a to displace the other ends (fixed-side connection portions) 212, 222 in a direction of separating from each other. As a result, the other ends (movable-side connection portions) 232, 242 of the movable-side links 23, 24 also separate from each other, so that an angle formed between the two movable-side links 23, 24 centered at the second shaft pin 231a is gradually widened. Then, in the open position in FIG. 2 and FIG. 5 where the storage opening 10b is open at the maximum, the second shaft pin 231a pivotally supporting the one ends (movable-member pivotal support portions) 231, 241 of the two movable-side links 23, 24 is set to pass a change point P of the two movable-side links 23, 24 to be close to the first shaft pins 211a, 221a. This makes, in the open position in FIG. 2 and FIG. 5, it possible not to pass the change point P and return to the original position as long as the force more than or equal to a predetermined force is not made to act on the storage rack 10 in the closing direction, resulting in maintaining the open state.

In this embodiment, the elastic member 30 includes a first tensile coil spring 30A suspended between an engaging pin provided on a longitudinal middle portion of the movable-side link 23 and an engaging pin provided on a longitudinal middle portion of the other movable-side link 24 so as to be biased in each of the direction in which the other ends (movable-side connection portions) 232, 242 of the movable-side links 23, 24 approach each other and the direction in which the other ends (fixed-side connection portions) 212, 222 of the fixed-side links 21, 22 approach each other. Further, in this embodiment, as the elastic member 30, a second tensile coil spring 30B is suspended between a longitudinal middle portion of the fixed-side link 21 and a longitudinal middle portion of the other fixed-side link 22.

Between these, when the second shaft pin 231a pivotally supporting the one ends (movable-member pivotal support portions) 231, 241 of the two movable-side links 23, 24 is located on a straight line connecting fulcrums (positions of the engaging pins) of the first tensile coil spring 30A suspended between the movable-side links 23, 24, the location is the change point P between the two movable-side links 23, 24 in the link mechanism of this embodiment.

As a result, when the position of the one ends (movable-member pivotal support portions) 231, 241 (the second shaft pin 231a) of the two movable-side links 23, 24 is, on the basis of the aforesaid change point P, close to the position of the one ends (movable-member pivotal support portions) 231, 241 (the second shaft pin 231a) of the two movable-side links 23, 24 at the time when the storage rack 10 is in the closed position (states in FIG. 1 and FIG. 3), the two movable-side links 23, 24 and the two fixed-side links 21, 22 form a substantial quadrangle in which substantially V-shaped open end sides face each other and one each of interior angles is less than 180 degrees, and thereby when the other ends (movable-side connection portions) 232, 242 of the movable-side links 23, 24 are biased in the direction of approaching each other and the other ends (fixed-side connection portions) 212, 222 of the fixed-side links 21, 22 are biased in the direction of approaching each other, the storage rack 10 is biased in a direction of narrowing an angle θ1 putting the second shaft pin 231a between the two movable-side links 23, 24 in the substantially V shape between and confronting the side of the first shaft pins 211a, 221a of the fixed-side links 21, 22, that is, in the closed-position direction.

In contrast to this, when the position of the one ends (movable-member pivotal support portions) 231, 241 (the second shaft pin 231a) of the two movable-side links 23, 24 is, on the basis of the aforesaid change point P, as illustrated in FIG. 2 and FIG. 5, close to the one ends (fixed-member pivotal support portions) 211, 221 (the first shaft pins 211a, 221a) of the fixed-side links 21, 22, the two movable-side links 23, 24 and the two fixed-side links 21, 22 have substantially V-shaped open end sides in the same direction as each other (a substantially upper direction in FIG. 2 and FIG. 5), and thereby when the other end (movable-side connection portion) 232 of the movable-side link 23 and the other end (fixed-side connection portion) 212 of the fixed-side link 21 are biased in the direction of approaching each other and the other end (movable-side connection portion) 242 of the movable-side link 24 and the other end (fixed-side connection portion) 222 of the fixed-side link 22 are biased in the direction of approaching each other by the first tensile coil spring 30A, the storage rack 10 is biased in a direction of widening the angle θ1 putting the second shaft pin 231a between the two movable-side links 23, 24 between and confronting the side of the first shaft pins 211a, 221a of the fixed-side links 21, 22, that is, in the open-position direction. This causes the storage rack 10 to be maintained in the open state even though restoring force of the elastic member 30 (the first tensile coil spring 30A and the second tensile coil spring 30B) acts in the open position in FIG. 2 and FIG. 5.

Further, in this embodiment, to assist biasing force in the closing direction of the storage rack 10, an auxiliary elastic member 31 is disposed. The auxiliary elastic member 31 has a first spiral spring 31A which engages the center thereof in the third shaft pin 232a pivotally supporting the other end (movable-side connection portion) 232 of the movable-side link 23 and the other end (fixed-side connection portion) 212 of the fixed-side link 21 and engages an outer peripheral end portion thereof in an engaging pin 23b of the movable-side link 23, and a second spiral spring 31B which engages the center thereof in the support shaft 11a pivotally supporting the storage rack 10 through the fixed frame 11 and engages an outer peripheral end portion thereof in an engaging pin 11d projectingly providing on the fixed frame 11, in this embodiment. The first spiral spring 31A and the second spiral spring 31B are wound up when the storage rack 10 is turned from the closed position in FIG. 1 and FIG. 3 to the open position in FIG. 2 and FIG. 5, and thereby the biasing force acts in an unwinding direction. When a person tries to lift the storage rack 10 with his/her hand from the open position in FIG. 2 and FIG. 5 to the closed position in FIG. 1 and FIG. 3, a mutual distance between the two movable-side links 23, 24 and a mutual distance between the two fixed-side links 21, 22 do not approach each other depending on an action of the restoring force of the elastic member 30 (the first tensile coil spring 31A and the second tensile coil spring 31B) unless the storage rack 10 is turned until the one ends (movable-member pivotal support portions) 231, 241 (the second shaft pin 231a) of the two movable-side link 23, 24 of the link mechanism 20 pass the change point P. Accordingly, a predetermined force in an attempt to lift the storage rack 10 in the closing direction is required until passing the change point P, and the auxiliary elastic member 31 (the first spiral spring 31A and the second spiral spring 31B) assists the force to reduce person's operating force.

Note that restoring force of the auxiliary elastic member 31 (the first spiral spring 31A and the second spiral spring 31B) in the closing direction is set to be lower than forces combining force resulting from, in the open position of the storage rack 10, its own weight and the restoring force of the elastic member 30 (the first tensile coil spring 30A and the second tensile coil spring 30B). This is because if the auxiliary elastic member 31 has stronger restoring force than the combined forces, the one ends (movable-member pivotal support portions) 231, 241 (the second shaft pin 231a) of the two movable-side links 23, 24 are displaced in a direction of passing the change point P even though a person does not lift the storage rack 10 with his/her hand at the time of unloading.

As described above, when the storage rack 10 is turned from the open position in the closing direction, the storage rack 10 does not turn automatically in the closing direction no matter how high the restoring force of the elastic member 30 is until passing the change point P, but when a person presses the storage rack 10 in the closing direction and the position of the one ends (movable-member pivotal support portions) 231, 241 (the second shaft pin 231a) of the two movable-side links 23, 24 passes the change point P, through the restoring force of the elastic member 30 (the first tensile coil spring 30A and the second tensile coil spring 30B), the storage rack 10 becomes closed even though the operating force with which a person lifts the storage rack 10 becomes smaller as it thereafter approaches the closed position. Therefore, the larger the restoring force of the elastic member 30 is, the more a turning velocity of the storage rack 10 in the closing direction is increased. Hence, to prevent the storage rack 10 from shutting with force at the closed position through the restoring force of the elastic member 30, the damper 40 is provided.

When the storage rack 10 is turned from the open position in the closing direction, the damper 40 may act in the entire range, but conversely, damping force of the damper 40 at the time of closing-direction turning becomes resistance when a person tries to turn the storage rack 10 from the closed position in the opening direction. Accordingly, the damper 40 is preferably set to reduce a velocity of the storage rack 10 in a predetermined operating range immediately before the closed position when the storage rack 10 is turned from the open position in the closing direction.

On the other hand, at the time of opening-direction operation of turning from the closed position in the opening direction, the stretch of the elastic member 30 causes a resistance to operation of the storage rack 10, which prevents it from opening with force, and thereby the addition of the damping force of the damper 40 thereto sometimes makes the operating force to the storage rack 10 too large, in particular, at the time of unloading when no baggage is accommodated in the storage rack 10. However, turning torque of the storage rack 10 increases when a turning angle from the closed position of the storage rack 10 is in a predetermined range (normally, a range of about 30 to 60 degrees). Accordingly, in particular, in consideration of the time of loading when baggage is accommodated in the storage rack 10, at the time of opening operation, the damping force of the damper 40 is preferably set to greatly act in the aforesaid range where the turning torque of the storage rack 10 increases.

That is, in the damper 40, it is preferable that the damping force acts to be relatively large in the vicinity of the closed position at the time of closing-direction operation of the storage rack 10, and the damping force acts to be relatively small in the vicinity of the closed position, to be relatively large in the middle of the turning range, and to be relatively small in the vicinity of the open position, at the time of opening-direction operation thereof.

In this embodiment, the damper 40 is suspended between the longitudinal middle portion of the movable-side link 23 and the longitudinal middle portion of the other movable-side link 24 in parallel with the first tensile coil spring 30A. Note that the damper 40 is not limited to one damper, and as necessary, a plurality of dampers can of course also be disposed by, for example, being suspended between a longitudinal middle portion of the fixed-side link 21 and a longitudinal middle portion of the other fixed-side link 22, or the like.

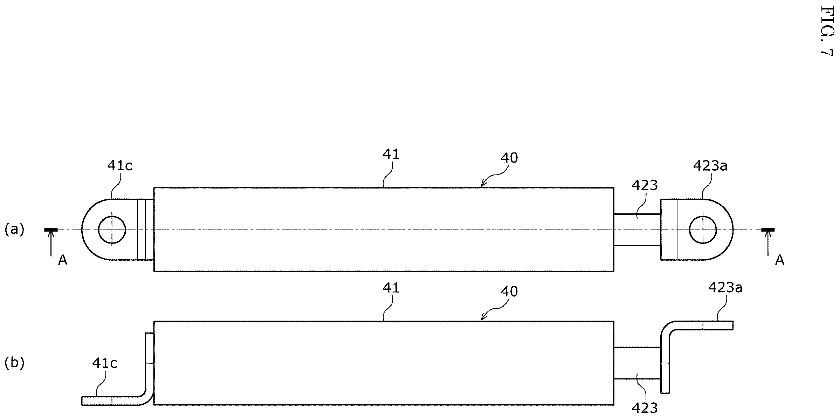

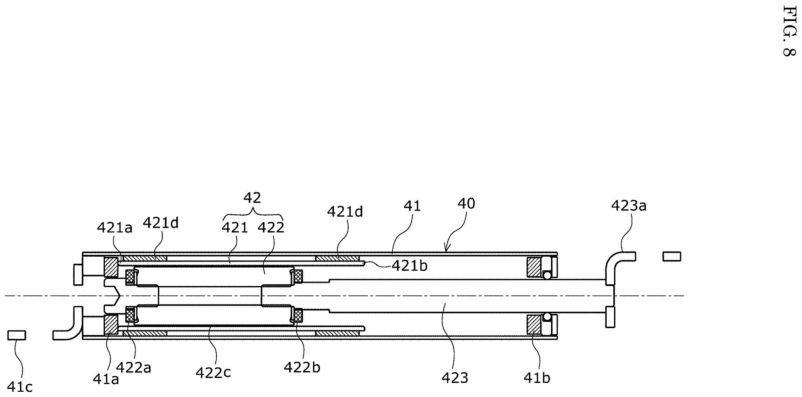

The damper 40 is constituted of a telescopic one in which a piston 42 is relatively moved in a cylinder 41 as illustrated in FIG. 7 and FIG. 8. However, as described above, there is used the one having the structure in which when the storage rack 10 is turned in the closing direction, high damping force acts in the vicinity of the closed position, and when it is turned in the opening direction, high damping force acts in the turning-torque increasing range where it is turned from the closed position to the predetermined angle (about 30 to 60 degrees).

The damper 40 of this embodiment is, to serve such a function, of a double structure in which the piston 42 to slide through the cylinder 41 includes an inner movable cylinder 421 and an inner piston 422 disposed in an inner peripheral portion of the inner movable cylinder 421. More specifically, stopper portions 41a, 41b are disposed at longitudinal end portions of the cylinder 41, and the inner movable cylinder 421 and the inner piston 422 are slidable until end portions 421a, 421b, 422a, 422b in the longitudinal direction abut on these stopper portions 41a, 41b. The inner movable cylinder 421 is longer in axial length than the inner piston 422, and the piston rod 423 is linked to the inner piston 422. Then, an attachment piece 41c provided on an outer end portion of cylinder 41 is linked to the movable-side link 23, and an attachment piece 423a provided on an outer end portion of the piston rod 423 is linked to the other movable-side link 24, to be disposed.

The inner piston 422 is provided with a string portion 422c formed by winding a linear member such as a thread exhibiting a predetermined friction damping force between the inner movable cylinder 421 and the inner piston 422, around its outer peripheral portion. In this embodiment, a viscous fluid such as grease having low consistency is made to adhere to the string portion 422c. The viscous fluid can be made to adhere to the linear member such as the thread forming the string portion 422c by being impregnated or coated therewith. Accordingly, when the inner piston 422 moves relative to the inner movable cylinder 421, the friction damping force caused by tension of the linear member forming the string portion 422c and viscous damping force of speed dependence caused by the viscous fluid act. That is, by a relative displacement of the inner piston 422 to the inner movable cylinder 421, friction force between the two of them is converted to the tension of the string portion 422c, and with an increase in the displacement amount, the thread forming the string portion 422c is hardened integrally to change to the direction of reducing a friction coefficient, thereby suppressing heat generation. This change causes the viscous damping force to be a speed dependence type. Therefore, the action of the friction damping force becomes relatively large in an input at low speed, but the viscous damping force increases as the speed is increased. Note that depending on increase and decrease in the number of turns of the thread forming the string portion 422c, a gap between adjacent portions of the wound thread, the number of stacks of the wound thread, or the like, the friction force and the viscous damping force to be generated are appropriately controlled. On one hand, between an outer peripheral surface of the inner movable cylinder 421 and an inner peripheral surface of the cylinder 41, so as to make friction force between the two of them relatively smaller than the friction force generated by the string portion 422c between the inner movable cylinder 421 and the inner piston 422, in this embodiment, between the inner movable cylinder 421 and the cylinder 41, low-friction members 421d such as rolling members or sliding members (for example, felt) are interposed.

This causes, when the piston 42 moves relatively in the cylinder 421 while following movements of the piston rod 423, until the end portions 421a, 421b of the inner movable cylinder 421 abut on the stopper portions 41a, 41b, owing to a difference between the friction force between the inner movable cylinder 421 and the inner piston 422, and, the friction force between the inner movable cylinder 421 and the cylinder 41, the inner movable cylinder 421 and the inner piston 422 to slide together in the cylinder 41. At this time, frictional resistance is very small owing to the low-friction members 421d between the inner movable cylinder 421 and the cylinder 41, and the inner movable cylinder 421, so to speak, freely runs in the cylinder 41 to generate little damping force. After the end portions 421a, 421b of the inner movable cylinder 421 abut on any of the stopper portions 41a, 41b, the inner movable cylinder 421 is not allowed to move, and thereby the inner piston 422 slides in the inner movable cylinder 421. This causes such friction damping force and viscous damping force as described above to act between the two of them. That is, the damper 40 of this embodiment is of a structure in which an optimum speed-displacement curve can be designed by speed control owing to combination of the friction force caused by tension of the string portion 422c and the viscous damping force of speed dependence caused by the viscous fluid made to adhere to the string portion 422c.

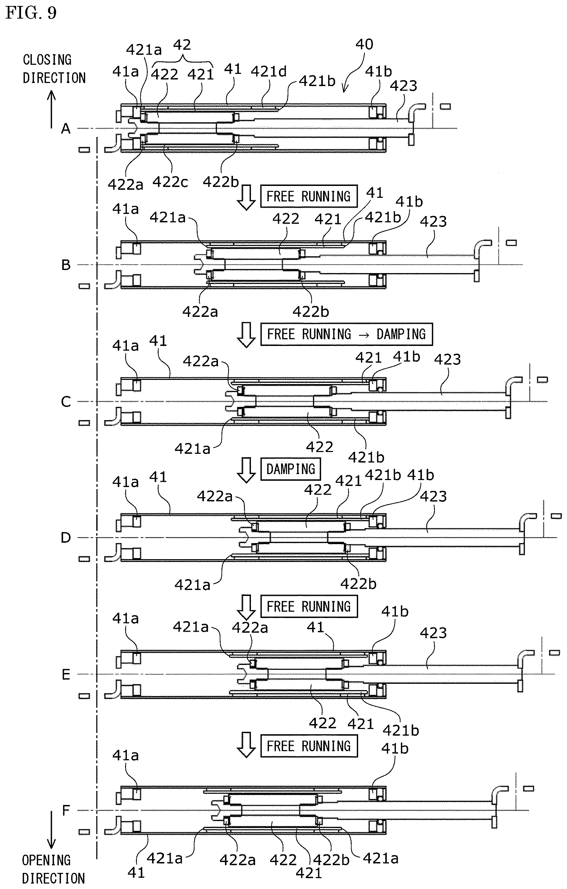

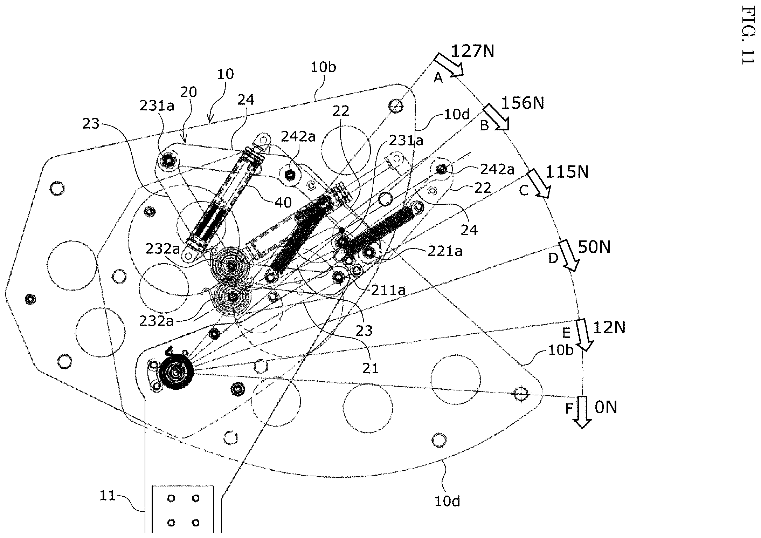

Using, as the damper 40, one having such characteristics allows damping force at a desired turning angle to be increased or conversely decreased by appropriately adjusting axial lengths of the cylinder 41, the inner movable cylinder 421 and the inner piston 422. In this embodiment, as illustrated in FIG. 9, in the closed position (A position, positions of the storage rack 10 are seen in FIG. 11 to FIG.14), the inner movable cylinder 421 is set to abut on the stopper portion 41a on the tip side, and the inner piston 422 is also similarly set to abut on the stopper portion 41a on the tip side.

In this state, in an attempt to turn the storage rack 10 from the closed position to the open position, because the two movable-side links 23, 24 are widened first, the piston rod 423 extends in a direction of separating from the cylinder 41. This causes, from A position in the vicinity of B position in FIG. 9, the inner movable cylinder 421 to move together with the inner piston 422, and thereby the damping force is very small and the inner movable cylinder 421 runs freely in the cylinder 41. In the vicinity of C position, first, the end portion 421b on the rear end side of the inner movable cylinder 421 abuts on the stopper portion 41b on the rear end side. The piston rod 423 is further displaced in the extending direction, but the inner movable cylinder 421 fails to be displaced by abutting on the stopper portion 41b on the rear end side, and thereby the inner piston 422 slides alone in the inner movable cylinder 421 from C position to the vicinity of D position. As a result, because friction force between the inner piston 422 and the inner movable cylinder 421 is large, the damping force acts. E position is the position where the one ends (movable-member pivotal support portions) 231, 241 of the movable-side links 23, 24 are located at the change point P, and the position where the piston rod 423 in the cylinder 41 is the most outside. F position is the open position where the turning-range restricting pin 10g is in contact with the upper edge in the turning-range restricting slot 11b. At this position, the two storage-rack links 23, 24 are formed into a shallow inverted substantially V shape since they have passed the change point P, and the inner piston 422 is located slightly close to the stopper portion 41a on the tip side with the inner movable cylinder 421.

This causes the damping force of the damper 40 to hardly act from A position to the vicinity of B position, and causes the predetermined damping force to act in the range of the predetermined turning angles from C position to the vicinity of D position, that is, in the range where the turning torque in the opening direction of the storage rack 10 is increased, when the storage rack 10 is turned from the closed position toward the open position. In contrast with this, from E position in the vicinity of F position where the two storage-rack links 23, 24 are formed into the inverted substantially V shape, that is, in the vicinity of the open position, the damping force of the damper 40 hardly acts.

When the storage rack 10 is turned from the open position to the closed position, in F position in FIG. 9, the end portion 421b on the rear end side of the inner movable cylinder 421 separates from the stopper portion 41b, and the inner movable cylinder 421 operates in the cylinder 41 together with the inner piston 422 up to E position. Hence, sliding resistance hardly acts from F position up to E position. From E position where the two fixed-side links 21, 22 are in a straight-line shape, the piston 42 slides toward the tip direction in the cylinder 41, and similarly also up to the vicinity of B position, the inner movable cylinder 421 operates in the cylinder 41 together with the inner piston 422, and the sliding resistance hardly acts during the operation either. Accordingly, when a person tries to lift the storage rack 10 in the closing direction, the damping force of the damper 40 does not act. After the two storage-rack links 23, 24 pass E position, the other ends (movable-side connection portions) 232, 242 of the two storage-rack links 23, 24 approach each other gradually through the restoring force of the elastic member 30 as described above, and the force with which a person lifts the storage rack 10 is hardly required. Then, in the vicinity of an end point of the closed position, that is, in a range from B position up to the vicinity of A position, the end portion 421a on the tip side of the inner movable cylinder 421 abuts on the stopper portion 41a on the tip side of the cylinder 41, and thereafter the inner piston 422 slides in the inner movable cylinder 421 until the end portion 422a on the tip side of the inner piston 422 abuts on the stopper portion 41a on the tip side of the cylinder 41. At this time, the damping force acts between the inner piston 422 and the inner movable cylinder 421 to reduce the velocity, and the storage rack 10 is slowly closed while resisting the restoring force of the elastic member 30.

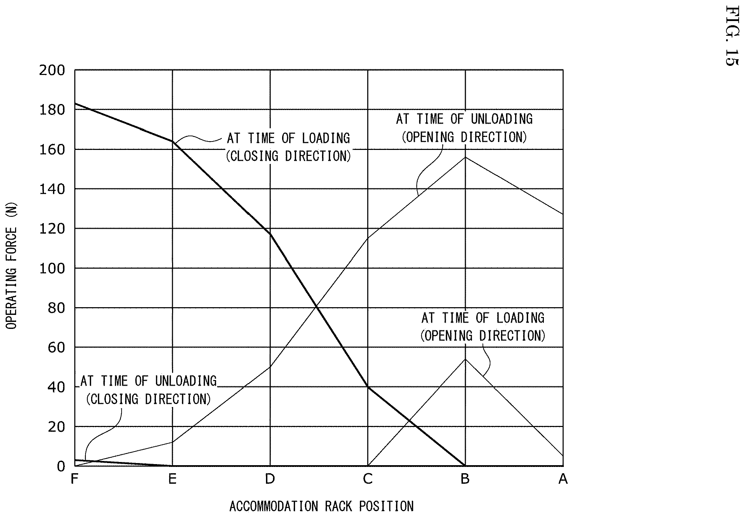

Here, at the time of unloading when no baggage is accommodated in the storage rack 10 of this embodiment, and at the time of loading when 45-kg baggage is accommodated, person's operating forces required at the time of closing-direction operation and at the time of opening-direction operation were measured. FIG. 11 to FIG. 14 present the measured results, and any of them illustrates operating forces at six points from the closed position A to the open position F. E position is the position where the one ends (movable-member pivotal support portions) 231, 241 of the two contraction-side links 23, 24 correspond to the change point P. Directions of arrows indicate operating directions of the storage rack 10. Further, these positions A to F correspond to the positions of the piston 42 of the damper 40 illustrated in FIG. 9 as described above. Further, FIG. 15 illustrates the measured results illustrated in FIG. 11 to FIG. 14 by summarizing them in a graph.

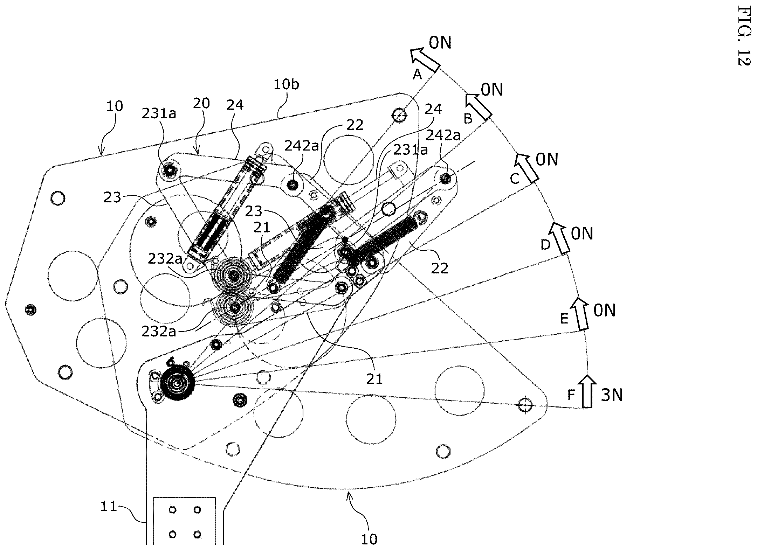

According to FIG. 11 to FIG. 15, as described above, the time of unloading requires no large operating force from the open position up to the closed position at the time of closing-direction turning. Also from the open position (F position) to E position where the one ends (movable-member pivotal support portions) 231, 241 of the movable-side links 23, 24 are located at the change point P, owing to the assist through the restoring force of the auxiliary elastic member 31, an operating force of only 3N is sufficient (refer to FIG. 12), and thereafter the restoring force of the elastic member 30 causes the storage rack 10 to almost automatically close. At the time of opening-direction turning, as illustrated in FIG. 11, since the resistance caused by the stretch of the elastic member 30 acts, an operating force of 127 N is required at A position of the closed position, thereafter requiring 156 N at B position and 115 N at C position. This is for preventing rapid opening operation at the time of loading. However, since the opening operation is performed in the direction in which a person hangs his/her hand on the handle 10f of the storage rack 10 and pulls it toward him/her, he/she is likely to display his/her power to be able to easily pull it. Moreover, at A position at the time of opening-operation start, the small damping force of the damper 40 as described above allows the opening operation to be performed with smaller operating force than that at B position. After passing D position, the required operating force is reduced by a weight of the storage rack 10 to be 12 N or less in the range from E position toward F position.

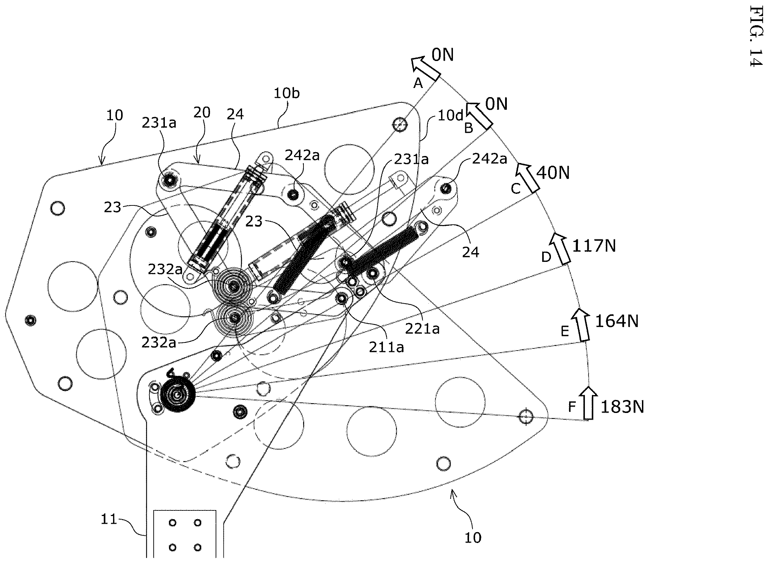

At the time of loading, as illustrated in FIG. 14, the operating force is 183 N at F position and 164 N at E position at the time of closing-direction turning. When the storage rack 10 is in the open state, the position of the storage rack 10 is low, which makes a person likely to display his/her power, and moreover the restoring force of the auxiliary elastic member 31 acts. This makes it possible to easily lift the storage rack 10 from F position to E position with even this degree of operating force. When the link 20 passes the change point P after passing E position, through the restoring force of the elastic member 30, the operating force is 117 N at D position, and further, 40 N at C position where a high position of the storage rack 10 makes it difficult for a person to give it power, and subsequently, at B position and A position, the storage rack 10 automatically closes through the restoring force of the elastic member 30 without requiring parson's power. Then, finally, the damping force of the damper 40 acts to reduce the velocity, resulting in that the storage rack 10 slowly closes.

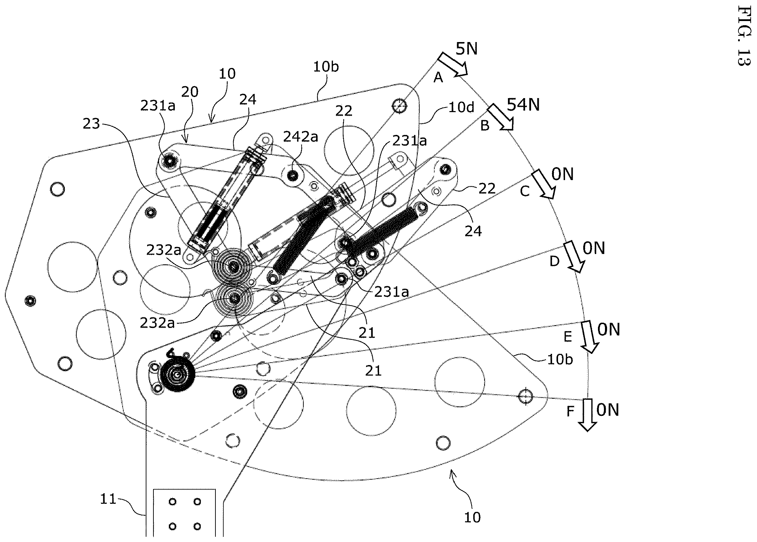

At the time of opening-direction turning, as illustrated in FIG. 13, at A position, since the damping force of the damper 40 does not act, the operating force required at a high position difficult for a person to operate is only 5 N. Thereafter, to suppress that the storage rack 10 opens with force due to a weight of loaded baggage, the damping force of the damper 40 acts to require the operating force of 54 N at B position, but subsequently to C position, the storage rack 10 slowly opens while being subjected to elastic resistance of the elastic member 30 without requiring large operating force.

When baggage is loaded in the vehicle upper storage-rack structure 1 of this embodiment, first, in accommodating the baggage, in an unloading state, the storage rack 10 is operated from the closed position to the open position. At this time, the opening operation is in a direction of pulling to the near side, and relatively easy operation is possible as described above, moreover, at the time of the opening-operation start, easier operation is possible since the damping force of the damper 40 does not act. In the open position, since the position of the second shaft pin 231a of the two movable-side links 23, 24 is closer to the first shaft pins 211a, 221a of the fixed-side links 21, 22 than the change point P, the open state is maintained without returning in the closing direction due to the restoring force of the elastic member 30.

Next, in the storage rack 10 in an open state where the storage opening 10b faces to the passenger cabin aisle, the baggage is accommodated. After accommodating the baggage, the storage rack 10 is lifted. The operating force at this time is 183 N in the above-described example, but since the storage rack 10 in a low position is lifted from below, it can be easily lifted with even this degree of the operating force. In passing the change point P, the restoring force of the elastic member 30 causes required operating force to be gradually decreased, which leads to automatically closing with the restoring force of the elastic member 30 in the vicinity of the closed position. At this time, the damping force of the damper 40 acts, and the storage rack 10 is slowly closed.

Also in opening the storage rack 10 in the state of accommodating the baggage, since the damping force of the damper 40 does not act at the time of operation start, the opening operation is possible with small operating force, and thereafter, the damping force of the damper 40 acts, and while suppressing that the storage rack 10 opens with force, after the damping force of the damper 40 does not act, the storage rack 10 is slowly opened mainly through the elastic force of the elastic member 30. After taking the baggage out of the storage rack 10, the storage rack 10 is lifted, and at this time, owing to unloading, as long as the change point P of the link 20 is passed by giving very small operating force at the open position, the storage rack 10 is more quickly closed by the elastic member 30 and slowly closed in the vicinity of the closed position by the action of the damper 40.

According to this embodiment, in the open position, using the link 20 having the structure in which the position of the second shaft pin 231a of the two movable-side links 23, 24 is closer to the first shaft pins 211a, 221a of the fixed-side links 21, 22 than the change point P allows the storage rack 10 to be maintained in the open state regardless of the restoring force of the elastic member 30 which biases the storage rack 10 in the closing direction. Accordingly, even though as the elastic member 30, in consideration of the operating force required for the turning operation in the opening direction, the one having the restoring force more than or equal to a predetermined force capable of quick turning operation in the closing direction is adopted, the storage rack 10 does not return in the closing direction. On one hand, simultaneously using the damper 40 in which large damping force acts in the vicinity of the closed position makes it possible to reduce a velocity in the vicinity of the closed position and mitigate impact at the time of closing even though the elastic member 30 having the restoring force more than or equal to the predetermined force is made to act.

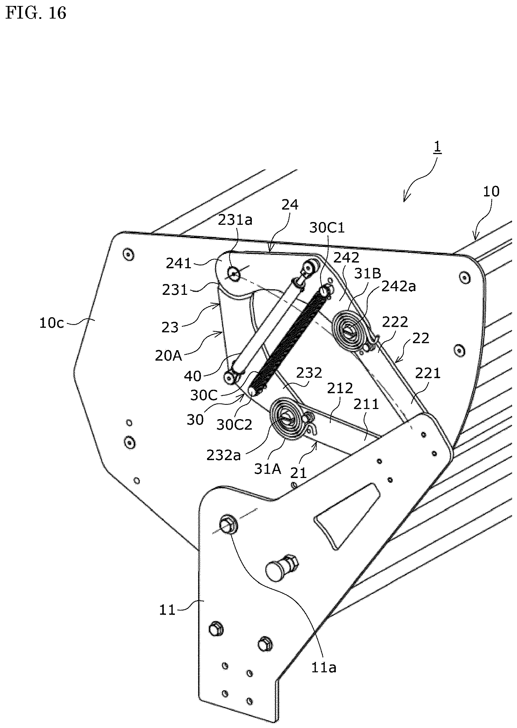

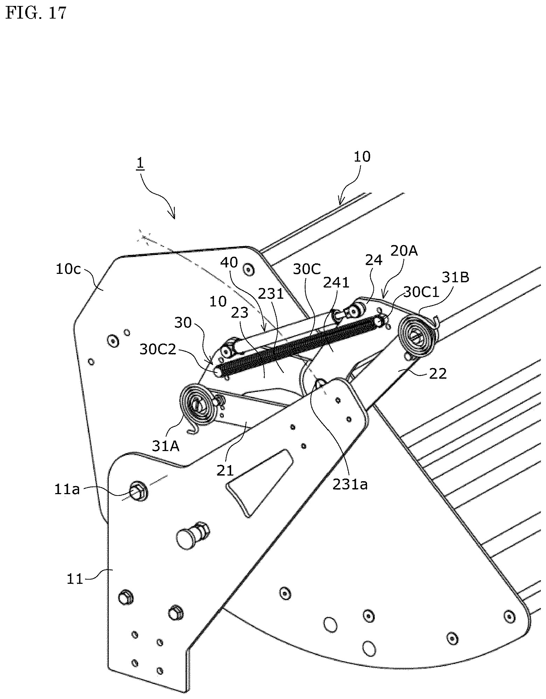

FIG. 16 to FIG. 25 are views illustrating a vehicle upper storage-rack structure 1 using a pantograph type of link mechanism 20A according to a second embodiment of the present invention. The same members as those of the above-described embodiment are indicated by the same reference signs.

The link mechanism 20A of this embodiment has, similarly to the above-described embodiment, two fixed-side links 21, 22 whose one ends (fixed-member pivotal support portions) 211, 221 are pivotally supported by a fixed frame 11, and two movable-side links 23, 24 whose one ends (movable-member pivotal support portions) 231, 241 are pivotally supported by an end wall portion 10c of a storage rack 10 by a second shaft pin 231a.

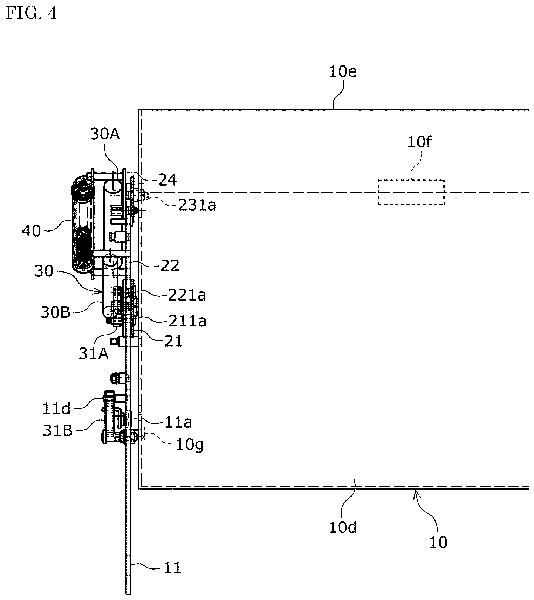

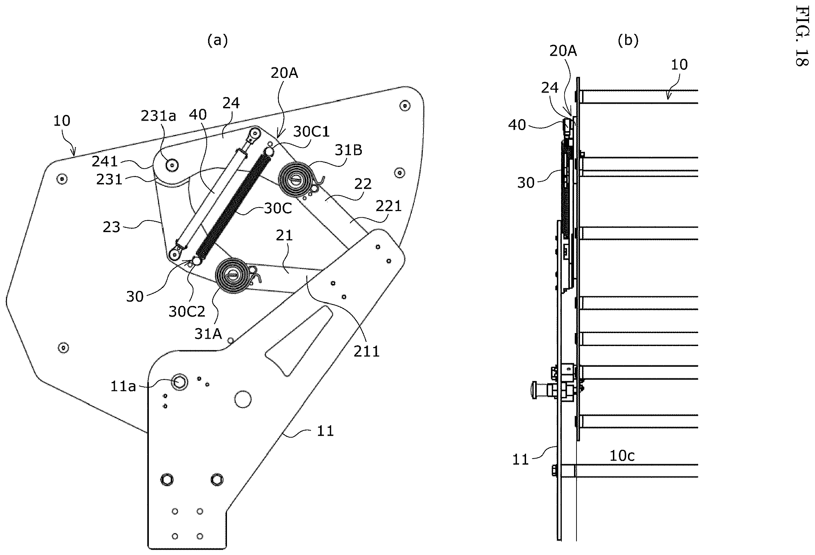

Further, although an elastic member 30 is also similarly provided, a tensile coil spring 30C is suspended only between the two movable-side links 23, 24 in this embodiment. In addition, a damper 40 is provided in parallel with the tensile coil spring 30C along a surface direction of the movable-side links 23, 24. This makes it possible to roughly halve a space required to dispose the tensile coil spring 30C and the damper 40 in this embodiment, as compared with the above-described embodiment in which the damper 40 is disposed to be stacked outside the first tensile coil spring 30A. Further, the fixed-side links 21, 22 and the movable-side links 23, 24 are each formed of one plate-shaped member, and this point also contributes to reduction in a space required to dispose the entire link mechanism 20A including the elastic member 30 and the damper 40. In this embodiment, as a result of being devised in this manner, as illustrated in FIG. 18(b), as long as it is possible to ensure about 25 mm as a distance between the fixed frame 11 and the end wall portion 10c of the storage rack 10, the entire link mechanism 20A including the elastic member 30 and the damper 40 can be disposed. In the above-described embodiment, as illustrated in FIG. 4, the elastic member 30 and the damper 40 are located more outside than the fixed frame 11, and a disposition space of the link mechanism 20 of the above-described embodiment corresponds to a distance from the end wall portion 10c of the storage rack 10 up to the damper 40 located the most outside, but as compared with the distance, a disposition space of this embodiment is less than or equal to the half thereof.

Further, in this embodiment, a first spiral spring 31A and a second spiral spring 31B as an auxiliary elastic member 31 are respectively provided around third shaft pins 232a, 242a which pivotally support other ends (movable-side connection portions) 232, 242 of the movable-side links 23, 24 and other ends (fixed-side connection portions) 212, 222 of the fixed-side link 21 with the centers thereof engaged.

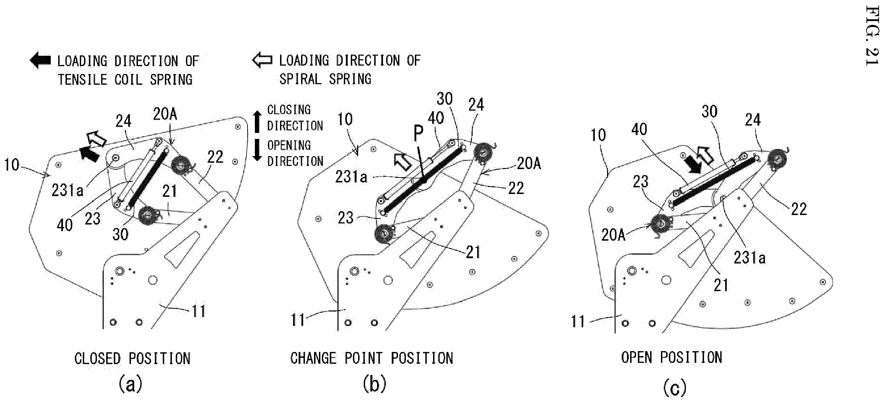

Also in this embodiment, a point where movable-member pivotal support portions (a second shaft pin 231a) which are one ends 231, 241 of the movable-side links 23, 24 is superimposed on a straight line connecting fulcrums 30C1, 30C2 (positions engaged in engaging pins) of the tensile coil spring 30C with the movable-side links 23, 24 when seen from a direction perpendicular to a turning surface of the movable-side links 23, 24 (a direction facing the end wall portion 10c of the storage rack 10) is a change point P of the movable-side links 23, 24 (refer to FIG. 21(b)). Then, the movable-side links 23, 24 can be turned in directions of both areas on one side and the other side between which the change point P is put.

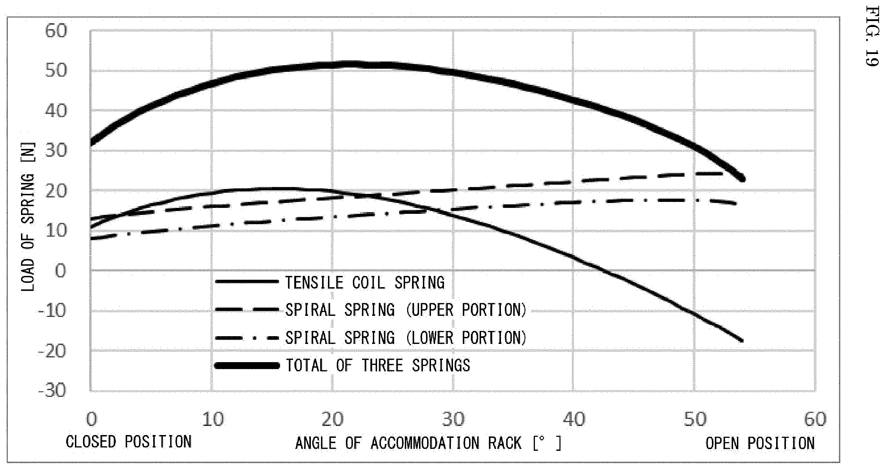

Since the direction of the movable-side links 23, 24 is reversed while the tensile coil spring 30C puts the change point P between (refer to FIG. 16, FIG. 17 and FIGs. 21(a), (c)), a load of the spring which acts in the turning direction of the storage rack 10 at the connecting portion between the storage rack 10 and the movable-side links 23, 24 is the highest at a position of the change point P where the tensile coil spring 30C becomes the longest, and decreases as the storage rack 10 heads toward each of the closed position (0 degrees) and the open position (54 degrees), as indicated by a thin solid line in FIG. 19. Further, directions in which spring loads of the first spiral spring 31A ("spiral spring (lower portion)" in the figure) and the second spiral spring 30B ("spiral spring (upper portion)" in the figure) act are always the closing direction, and the spring loads are minimum at the closed position and maximum at the open position, but a load characteristic obtained by combining the three springs exhibits such variations as indicated by a thick solid line in FIG. 19. That is, the total load of the three springs is maximum approximately at 22 degrees, and the load of the springs decreases even though the storage rack 10 heads toward either of the open position and the closed position. Accordingly, the configuration in which the direction of the movable-side links 23, 24 is reversed while the tensile coil spring 30C puts the change point P between causes the setting which makes it possible to contribute to the storage rack 10 returning without standing still in the open position and contribute to the reduction in operating force in the opening direction in the closed position.

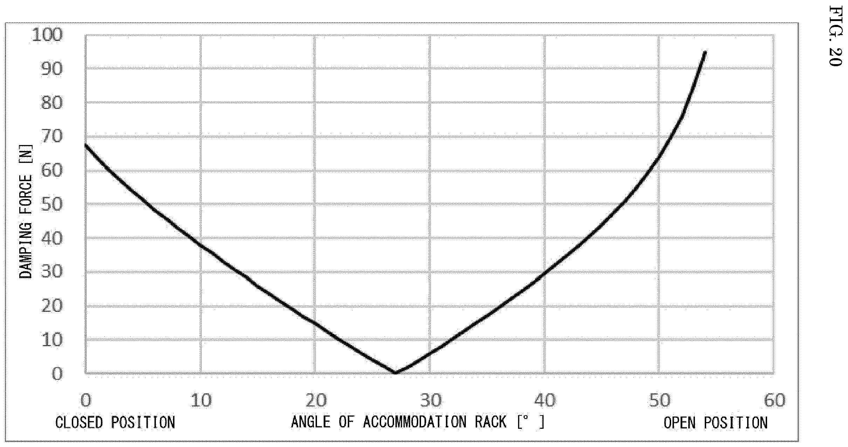

FIG. 20 illustrates a damping characteristic of the damper 40 used in this embodiment. The direction in which damping force of the damper 40 acts is the turning direction of the storage rack 10. Since it is the vicinity of closed position and the vicinity of the open position that require damping in the operation of the storage rack 10, the damping force is set to 0 (N) approximately at 27 degrees at the middle point.

The pantograph type of link mechanism 20A of this embodiment also acts similarly to the above-described embodiment. FIGs. 21(a) to (c) are views illustrating loading directions of the respective tensile coil spring 30C and spiral springs 31A, 31B at the time of opening/closing the storage rack 10. As illustrated in the figures, in the open position in FIG. 21(a), any of the tensile coil spring 30C and the spiral springs 31A, 31B biases the movable links 23, 24 in a direction of approaching each other. In FIG. 21(b), the movable links 23, 24 are located at the change point P of the link mechanism 20A and in a state of being biased neither in the opening direction nor in the closing direction, and in the open position in FIG. 21(c), the movable links 23, 24 are biased to be pushed out in a direction of the fixed-member pivotal support portions.

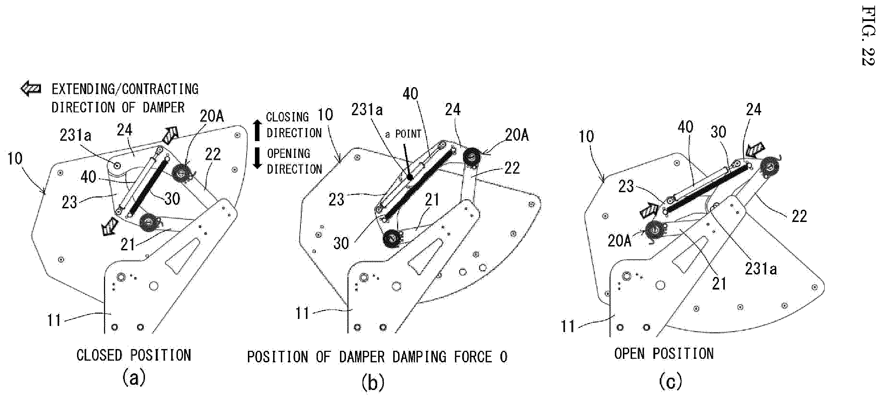

In the damper 40, as illustrated in FIGs. 22(a) to (c), first, when the storage rack 10 is operated from the closed position to the open position, the damper 40 is displaced in an extending direction in the closed position in FIG. 22(a). Then, in the vicinity of the middle of in FIG. 22(b) where the storage rack 10 is opened at a predetermined angle, 27 degrees as described above in this embodiment, in the opening direction, the damping force of the damper 40 is set not to act, and moreover, in the opening position in FIG. 22(c), the damper 40 is displaced in a contracting direction. When the storage rack 10 is moved in the reverse direction, the damper 40 moves in the reverse direction thereto. As a result, the damping force increases in the vicinity of the open position and the vicinity of the closed position.

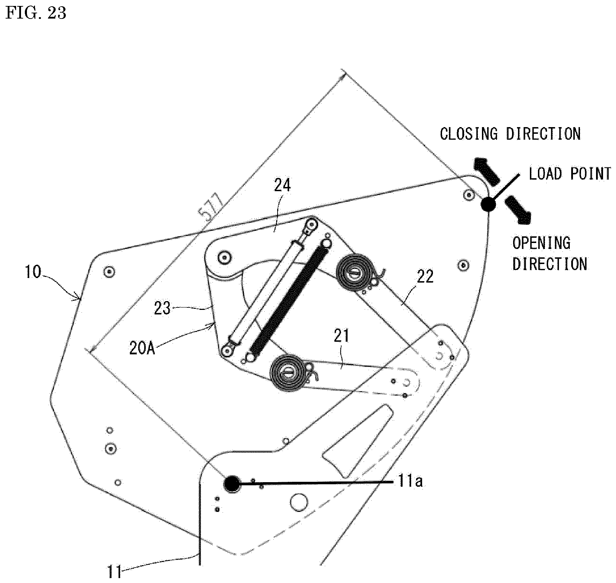

Next, regarding this embodiment, the operating forces were measured. As illustrated in FIG. 23, for the measurement of the operating force, a position 577 mm apart from a support shaft 11a which is the turning center of the storage rack 10 is regarded as a load point, and a load is applied in the opening/closing directions of the storage rack 10. For no storage of baggage in the storage rack 10 of 0 kg (no baggage) and for the storage of pieces of baggage of 15 kg, 30 kg, 45 kg, the operating forces were measured. Measuring positions were set at 0 degrees (closed position), 10 degrees, 20 degrees, 30 degrees, 40 degrees, 50 degrees, 54 degrees (open position). The measurement in the closing direction was performed by pushing the load point up from the closed position at 54 degrees, and the measurement in the opening direction was performed by turning the storage rack 10 downward so as to pull the load point from the closed position at 0 degrees. Note that a mass of the storage rack 10 itself was 7 kg.

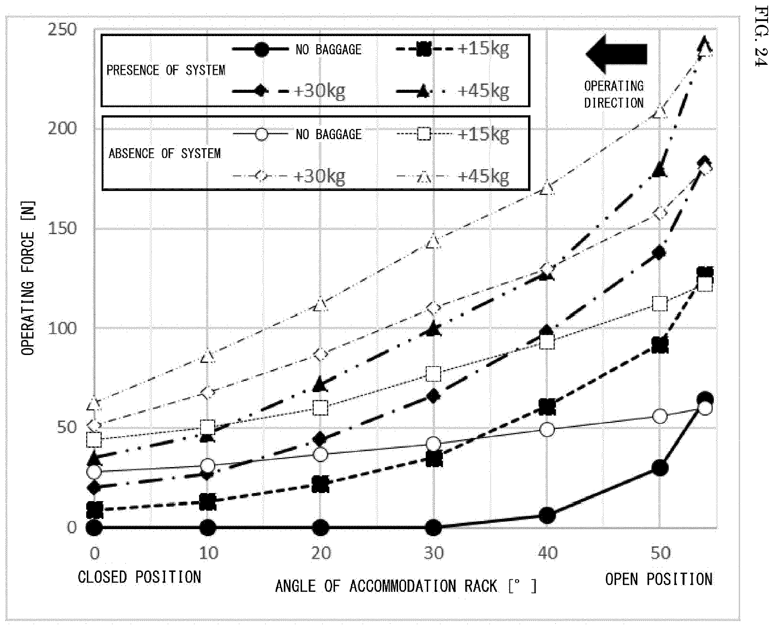

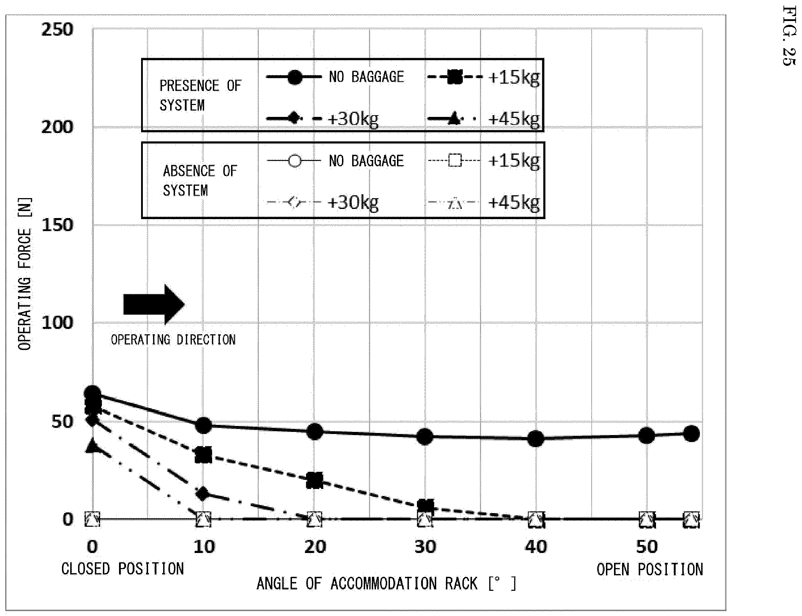

FIG. 24 illustrates measured results of the operating forces in the closing direction, and FIG. 25 illustrates measured results of the operating forces in the opening direction. In both of the results, in addition to the adoption of the link mechanism 20A of this embodiment (in the figures, represented as "the presence of the system"), for comparison, operating forces were also measured regarding the adoption of a structure in which the link mechanism 20A of this embodiment was removed (in the figures, represented as "the absence of the system").

In the closing direction in FIG. 24, regardless of a mass of baggage, there is no difference in the operating forces at 54 degrees (open position), but as the storage rack 10 is lifted, the operating forces are reduced for "the presence of the system" of the adoption of the link mechanism 20A of this embodiment more than those for "the absence of the system" of comparative examples, resulting in that the operation forces are greatly reduced to 30 degrees. Thereafter, although the reduction amounts become gradual, the operating forces are reduced to 0 degrees (closed position) more than those for "the absence of the system" of the comparative examples. Further, for "the presence of the system" of the adoption of the link mechanism 20A of this embodiment and "no baggage", the operating force was 0 (N) owing to closing only through spring force at and below 30 degrees.

In the opening-direction case in FIG. 25, for "the absence of the system" of the comparative examples, the storage rack 10 moved through its own weight, and all loads were 0 (N) regardless of the presence/absence of baggage, while, for "the presence of the system" of the adoption of the link mechanism 20A of this embodiment, an operating force of about 50 (N) is required at 0 degrees (open position), but when baggage is loaded, the operating force is rapidly reduced after passing 10 degrees.

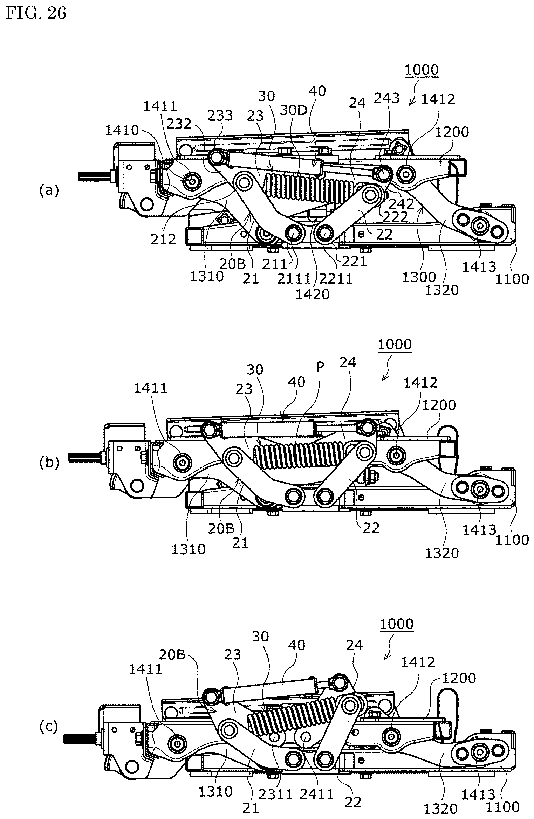

FIG. 26 to FIG. 28 are views for explaining a pantograph type of link mechanism 20B according to a third embodiment applied to a seat suspension mechanism 1000 of automobiles disposed between a vehicle body structure and a seat. The seat suspension mechanism 1000 has a lower frame 1100 as a fixed member mounted on the vehicle body structure (not illustrated) side and an upper frame 1200 mounted on the seat (not illustrated) side.

The upper frame 1200 is supported through a parallel link 1300 by the lower frame 1100. Further, the upper frame 1200 is elastically supported through a spring mechanism including a linear spring 1410 and a magnetic spring 1420. The linear spring 1410 is constituted of three of torsion bars 1411, 1412 provided at sections linked to the upper frame 1200 in a front link 1310 and a rear link 1320 constituting the parallel link 1300, and a torsion bar 1413 provided at a section linked to the lower frame 1100 in the rear link 1320, and biases the upper frame 1200 in a direction of separating from the lower frame 1100 through the parallel link 1300.

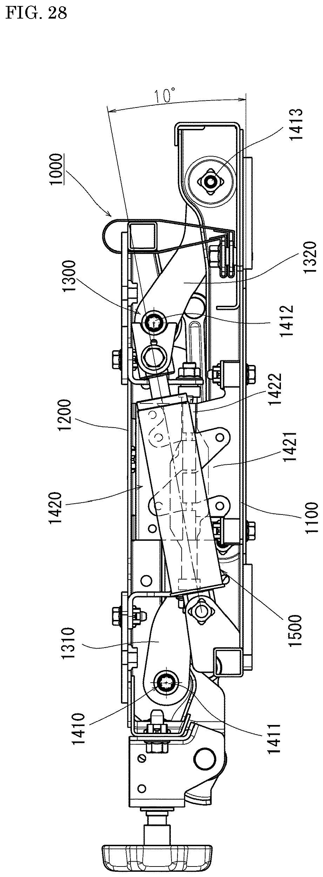

The magnetic spring 1420, which is similar to ones disclosed in Patent Documents 2 and 3 and whose details are omitted, is fixed to the lower frame 1100, and includes a stationary magnet unit 1421 having a pair of two stationary magnets provided, for example, such that the same poles are opposite to each other, and a movable magnet unit 1422 supported by a frame provided on the upper frame 1200 and having a movable magnet movable up and down between the pair of two stationary magnets, as illustrated in FIG. 28. When the upper frame 1200 moves up and down relative to the lower frame 1100, the movable magnet is displaced in a gap between the pair of two stationary magnets, and a spring characteristic of the magnetic spring 1420 changes to a nonlinear one depending on a relative position therebetween. That is, when a characteristic that restoring force increases in an acting direction of elastic force (restoring force) of the torsion bars 1411, 1412, 1413 which are the linear springs, that is, in a direction of separating the upper frame 1200 from the lower frame 1100 is referred to as a positive spring characteristic, the magnetic spring 1420 exhibits, in its load-deflection characteristic, a negative spring characteristic that the restoring force in this direction decreases in a predetermined displacement amount range. Accordingly, in the range where the negative spring characteristic functions in the magnetic spring 1420, combining a spring constant of the positive spring characteristic of the torsion bars 1411, 1412, 1413 (positive spring constant) therewith results in, as the total spring constant, having a constant load region where a change amount of a load value is less than or equal to a predetermined amount even if the displacement amount increases, that is, a region where the spring constant is substantially zero (preferably a spring constant within a range of about -10 N/mm to about 10 N/mm). Thus, adjusting the range where the spring constant is substantially zero so as to be in the vicinity of a balanced point when a person is seated allows high vibration absorbing performance to be obtained.

In the seat suspension mechanism 1000, a damper (for seat suspension) 1500 is obliquely suspended and disposed between the lower frame 1100 and the upper frame 1200. Here, the damper 1500 is obliquely mounted at a mounting angle of 10 degrees relative to the lower frame 1100. Providing the above damper 1500 allows a high impact absorbing function to be exhibited against an input with large amplitude. A type of the damper 1500 to be used is not limited, and an oil damper, a friction damper, or the like can be used.

The seat suspension mechanism 1000 of this embodiment is of the structure having the region where the spring constant is substantially zero, but in the conventional suspensions presented in Patent Documents 2, 3, the aforesaid negative spring characteristic is established by only the magnetic spring 1420. In contrast with this, the seat suspension mechanism 1000 of this embodiment is characterized by providing the pantograph type of link mechanism 20B together and exhibiting the negative spring characteristic also through the pantograph type of link mechanism 20B.

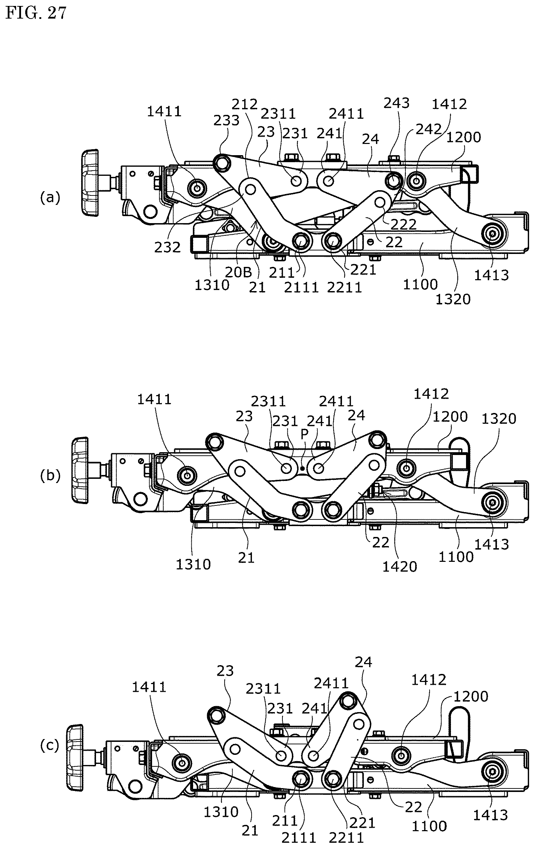

That is, the pantograph type of link mechanism 20B of this embodiment has, as illustrated in FIGs. 27(a) to (c), two fixed-side links 21, 22 whose one ends (fixed-member pivotal support portions) 211, 221 are pivotally supported through shaft members 2111, 2211 by the lower frame 1100 which is a fixed member, and, which are disposed to be widened in a substantially V shape as heading toward other ends (fixed-side connection portions) 212, 222, and two movable-side links 23, 24 whose one ends (movable-member pivotal support portions) 231, 241 are pivotally supported through shaft members 2311, 2411 by the upper frame 1200 which is a movable member, and, which are disposed so that, in a position where the upper frame 1200 is at the top end, as heading from the one ends (movable-member pivotal support portions) 231, 241 toward other ends (movable-side connection portions) 232, 242, virtual lines connecting the one ends and the other ends become a substantially inverted V shape.

Moreover, the movable-side links 23, 24 are each formed in a substantially triangle in side view, and at sections projecting upward relative to the virtual lines connecting the one ends (movable-member pivotal support portions) 231, 241 and the other ends (movable-side connection portions) 232, 242, damper engaging portions 233, 243 for suspending and disposing a damper (hereinafter, "damper for pantograph") 400 are provided.

An elastic member 30 used in the pantograph type of link mechanism 20B used in this embodiment is constituted of a tensile coil spring 30D and suspended between the other ends (movable-side connection portions) 232, 242 of the movable-side links 23, 24, as illustrated in FIGs. 26(a) to (c). Further, in side view, a point where the movable-member pivotal support portions (shaft members 2311, 2411) which are the one ends 231, 241 of the movable-side links 23, 24 are superimposed on a straight line connecting fulcrums (the other ends (movable-side connection portions) 232, 242) of the tensile coil spring 30D is a change point P of the movable-side links 23, 24. Then, the movable-side links 23, 24 are turnable in directions of both regions on one side and the other side putting the change point P therebetween.

Also in this embodiment, the direction of the movable-side links 23, 24 is reversed between when the upper frame 1200 is located above and when it is located below while the tensile coil spring 30D puts the change point P between. This causes the tensile coil spring 30D to bias the one ends (movable-member pivotal support portions) 231, 241 of the movable-side links 23, 24 upward when the upper frame 1200 is located further above than a balanced point and bias the one ends (movable-member pivotal support portions) 231, 241 of the movable-side links 23, 24 downward when the upper frame 1200 is located further below than the balanced point.

This causes the one ends (movable-member pivotal support portions) 231, 241 of the movable-side links 23, 24 to be biased downward when the upper frame 1200 is located further below than the balanced point. At this time, the tensile coil spring 30D is set to have the highest load at the change point P and to decrease the load when heading for both of the upper direction and the lower direction, similarly to the above-described embodiment (refer to FIG. 19).

Then, when the upper frame 1200 of the seat suspension mechanism 1000 is located in the vicinity of the balanced point, the movable-side links 23, 24 are set to be located at the change point P, and thereby when the upper frame 1200 is displaced further downward than the change point P, the one ends (movable-member pivotal support portions) 231, 241 of the movable-side links 23, 24 are biased downward, thereby resulting in exhibiting a negative spring characteristic caused by the tensile coil spring 30D.

Accordingly, in this embodiment, not only the negative spring characteristic of the magnetic spring 1420 but also the negative spring characteristic caused by the tensile coil spring 30D are superimposed. This makes it possible to form the constant load region even in such a configuration as to dispose the three torsion bars 1411, 1412, 1413 exhibiting the positive spring characteristic and set the spring force in the positive direction to be higher than conventionally, which also makes it possible to cope with further increase in load mass, in this embodiment. Further, when the upper frame 1200 is displaced upward from a position lower than the change point P, the negative spring characteristic caused by the tensile coil spring 30D of the link mechanism 20B makes the movement go more slowly, thereby also allowing the impact absorbing function to be improved.

The damper for pantograph 400 is suspended between the damper engaging portions 233, 243 as described above. A type of the usable damper for pantograph 400 is not limited here, but for example, it is possible to use a damper in which a viscous liquid such as grease is made to adhere around a piston sliding in a cylinder and viscous friction force is combined with viscous damping force to allow high damping force to be exhibited as a whole, which is disclosed in WO2018/025992.

Further, it is also possible to use the damper 40 having the free running region which is of a double structure in which the piston 42 sliding through the cylinder 41 includes the inner movable cylinder 421 and the inner piston 422 disposed in an inner peripheral portion of the inner movable cylinder 421, which is described in the above-described embodiment. By setting the state where the upper frame 1200 is located in the vicinity of the balanced point to be the free running region of the damper 40, the damping force is reduced in the vicinity of the balanced point, and maximum damping force is exhibited in the vicinities of end points in the operation range, that is, in the vicinity of the top end and the vicinity of the bottom end of the upper frame 1200. Accordingly, in the vicinity of the balanced point, vibrations are absorbed by the spring characteristic in which the spring constant is substantially zero, and at the same time impact force is mitigated against an input with large amplitude by also adding an action of the damper for pantograph 400 in addition to an action of the aforesaid damper 1500, resulting in that the impact absorbing function of suppressing a bottom touch and a top touch can be enhanced in the vicinity of the top end and the vicinity of the bottom end.

### Explanation of Reference Signs

- 1: vehicle upper storage-rack structure
- 10: storage rack
- 10b: storage opening
- 10c: end wall portion
- 11: fixed frame
- 11a: support shaft
- 20, 20A, 20B: (pantograph type) link mechanism
- 21, 22: fixed-side link
- 211, 221: one end (fixed-side link)
- 211a, 221a: first shaft pin
- 212, 222: other end (fixed-side link)
- 23, 24: movable-side link
- 231, 241: one end (movable-side link)
- 231a: second shaft pin
- 232, 242: other end (movable-side link)
- 232a, 242a: third shaft pin
- 30: elastic member
- 30A: first tensile coil spring
- 30B: second tensile coil spring
- 30C: tensile coil spring
- 31: auxiliary elastic member
- 31A: first spiral spring
- 31B: second spiral spring
- 40, 400: damper (for pantograph)
- 41: cylinder
- 42: piston
- 421: inner movable cylinder
- 421d: low-friction member
- 422: inner piston
- 422c: string portion
- 423: piston rod
- 1000: seat suspension mechanism
- 1100: lower frame
- 1200: upper frame
- 1500: damper (for seat suspension)
- P: change point

## Claims

1. A link mechanism being a pantograph type, the link mechanism comprising: two fixed-side links having fixed-member pivotal support portions pivotally supported by a fixed member; and two movable-side links having movable-member pivotal support portions pivotally supported by a movable member, fixed-side connection portions of the fixed-side links and movable-side connection portions of the movable-side links being turnably connected with one another, and the movable member being supported to be displaceable relative to the fixed member,
an elastic member which imparts elastic force to bias the movable-side links in a turning direction,
the movable-member pivotal support portions being displaceable to move back and forth across a region on one side close to the fixed-member pivotal support portions and a region on the other side opposite thereto while putting a change point of the movable-side links therebetween, and
the movable-side links being biased in a direction in which the movable-member pivotal support portions approach the fixed-member pivotal support portions when the movable-member pivotal support portions are located in the region on one side, and the movable-side links being biased in a direction in which the movable-member pivotal support portions separate from the fixed-member pivotal support portions when the movable-member pivotal support portions are located in the region on the other side, by the elastic member.

2. The link mechanism according to claim 1, comprising a tensile coil spring suspended between the movable-side links as the elastic member,
wherein a point where the movable-member pivotal support portions are located on a straight line connecting fulcrums of the tensile coil spring with the two movable-side links when seen from a direction perpendicular to a turning surface of the movable-side links and the fixed-side links is the change point.

3. The link mechanism according to claim 1 or 2, further comprising a damper.

4. The link mechanism according to claim 3,
wherein the damper is a telescopic type in which a piston relatively moves in a cylinder, and is suspended at least one of between the two fixed-side links and between the two movable-side links.

5. The link mechanism according to claim 4,
wherein the damper in which
the cylinder includes an outer fixed cylinder linked to any link of the fixed-side links and the movable-side links and an inner movable cylinder provided to be movable in the outer fixed cylinder, and
the piston is disposed in the inner movable cylinder and supported by a piston rod linked to any link of the fixed-side links and the movable-side links,
exhibits a predetermined damping force when the inner movable cylinder does not relatively move in the outer fixed cylinder and the piston relatively moves in the inner movable cylinder.

6. A vehicle upper storage-rack structure comprising a storage rack whose base portion is pivotally supported by a fixed frame provided in an interior upper portion of a vehicle and which is opened and closed by turning operation between an open position where a storage opening confronts a passenger cabin aisle and a closed position where the storage opening is further above than the open position,
wherein the link mechanism according to any one of claims 1 to 5 is provided as a link mechanism connecting the fixed frame as the fixed member and the storage rack as the movable member,
wherein the link mechanism is provided so that the movable-member pivotal support portions of the two movable-side links are located in a region on one side close to the fixed-member pivotal support portions in the open position of the storage rack and the movable-member pivotal support portions of the two movable-side links are located in the region on the other side in the close position of the storage rack, and
wherein the movable-member pivotal support portions are biased in the open-position direction of the storage rack which is a direction of approaching the fixed-member pivotal support portions by the elastic member in the open position of the storage rack, and the movable-member pivotal support portions are biased in the open-position direction of the storage rack which is a direction of separating from the fixed-member pivotal support portions by the elastic member in the close position of the storage rack.

7. The vehicle upper storage-rack structure according to claim 6, being for aircraft.

8. A seat suspension mechanism disposed between a vehicle body structure and a seat, the seat suspension mechanism comprising:
a spring mechanism elastically supporting an upper frame as the movable member mounted on the seat side relative to a lower frame as the fixed member mounted on the vehicle body structure side; and
a damper exhibiting damping force to absorb energy when the upper frame moves up and down relative to the lower frame,
wherein the spring mechanism comprises;
a linear spring exhibiting a linear characteristic of biasing the upper frame in a direction of separating from the lower frame in a normal state; and
a magnetic spring including a stationary magnet, and a movable magnet to displace a relative position to the stationary magnet with up-down movement of the upper frame relative to the lower frame, and exhibiting a nonlinear characteristic of varying a spring constant depending on the relative position between the stationary magnet and the movable magnet, and
the spring mechanism further comprises
the link mechanism according to any one of claims 1 to 5 as a link mechanism supporting the upper frame to be movable up and down relative to the lower frame,
wherein the link mechanism is provided so that the movable-member pivotal support portions of the two movable-side links are located in a region on one side close to the fixed-member pivotal support portions when the upper frame is located further below than a balanced point, and the movable-member pivotal support portions of the two movable-side links are located in the region on the other side when the upper frame is located further above than the balanced point,
wherein the movable-member pivotal support portions are biased in a lower direction which is a direction of approaching the fixed-member pivotal support portions by the elastic member of the link mechanism when the upper frame is located further below than the balanced point, and the movable-member pivotal support portions are biased in an upper direction which is a direction of separating from the fixed-member pivotal support portions by the elastic member of the link mechanism when the upper frame is located further above than the balanced point, and
wherein a load-deflection characteristic combining the linear spring, the magnetic spring, and, the elastic member of the link mechanism includes a characteristic of being a constant load in a displacement range corresponding to a predetermine up-down movement range including the balanced point of the upper frame.
